# EUROPEAN PATENT SPECIFICATION

(11) **EP 3 372 480 B1**
(45) Date of publication and mention of the grant of the patent: **15.09.2021**
(21) Application number: 18160495.0
(22) Date of filing: 07.03.2018
(51) Int. Cl.: B62K 5/027, B62K 5/05, B62K 5/08, B62K 5/10, B62K 19/20, B62K 19/32, B62K 5/02

(54) **VEHICLE**
FAHRZEUG
VÉHICULE

(30) Priority: 07.03.2017 JP 2017042843
(43) Date of publication of application: 12.09.2018
(73) Proprietor: Yamaha Hatsudoki Kabushiki Kaisha, Iwata-shi Shizuoka 438-8501 (JP)
(72) Inventor: MITSUOKA, Ryuta, Iwata-shi, Shizuoka 438-8501 (JP); HIRAKAWA, Nobuhiko, Iwata-shi, Shizuoka 438-8501 (JP)
(74) Representative: Grünecker Patent- und Rechtsanwälte PartG mbB

(56) References cited:
- EP-A1- 2 923 932
- EP-A2- 3 069 979
- EP-B1- 1 227 966
- CN-B- 102 092 434
- CN-U- 201 670 311
- JP-A- 2013 035 487
- JP-U- H0 313 294
- US-A1- 2014 375 015

## Description

The present invention relates to a vehicle including a body frame that can lean and two front wheels that are aligned side by side in a left-and-right direction. Prior art document EP 3 069 979 A1 discusses a rocking vehicle in which a rocking lock mechanism can be compactly disposed. EP 3 069 979 A1 discloses the features of the preamble of claim 1. The rocking vehicle includes a body frame that includes a head pipe and a main frame extending rearwardly from the head pipe. An upper arm is rockably supported by the body frame. A lower arm is disposed below the upper arm and rockably supported by the body frame. Side members to which end portions of the upper arm and end portions of the lower arm are turnably coupled. A rocker mechanism is configured from a rocker arm and the side members. The rocker arm is composed of the upper arm and the lower arm. A rocking lock mechanism locks the rocker mechanism against rocking, wherein the rocking lock mechanism is at least partially disposed between the head pipe and the main frame.

Non-Patent Document 1 describes a vehicle including a body frame that can lean and a right front wheel and a left front wheel that are aligned side by side in a left and right direction. This vehicle leans to the right of the vehicle when it turns to the right and leans to the left of the vehicle when it turns to the left. This vehicle includes a link mechanism.

The link mechanism includes an upper cross member and a lower cross member. The link mechanism also includes a right side member that is connected to right portions of the upper cross member and the lower cross member, and a left side member that is connected to left portions of the upper cross member and the lower cross member. Middle portions of the upper cross member and the lower cross member are supported on the body frame. The upper cross member and the lower cross member are supported on a link supporting portion of the body frame so as to turn about axes that extend substantially in a front-and-rear direction of the body frame.

The upper cross member and the lower cross member turn relative to the body frame as the body frame leans, whereby positions of the right front wheel and the left front wheel change relative to each other in an up-and-down direction of the body frame. With the vehicle remaining in an upright state, the upper cross member and the lower cross member are provided above the right front wheel and the left front wheel in relation to the up-and-down direction of the body frame.

This link mechanism supports the right front wheel and the left front wheel so as to move in the up-and-down direction of the body frame. The link mechanism supports the right front wheel so as to turn about a right steering axis that extends in the up-and-down direction of the body frame and supports the left front wheel so as to turn about a left steering axis that is parallel to the right steering axis.

### [Non-Patent Document]

[Non-Patent Document 1] Catalogo parti di ricambio, MP3 300 ie LT Mod. ZAPM64102, Piaggio

In vehicles like the one described above, there is a situation where forces different in magnitude are exerted on a right front wheel and a left front wheel. For example, forces different in magnitude are exerted on the right front wheel and the left front wheel in such a situation that the right front wheel enters a pool while the left front wheel does not enter the pool. Alternatively, forces different in magnitude are exerted on the right front wheel and the left front wheel in such a state that the right front wheel rides on a piece of stone while the left front wheel remains in contact with a flat road surface.

For example, when a frictional force inputted into the right front wheel from a road surface is greater than a frictional force inputted into the left front wheel from a road surface in braking to slow down or stop the vehicle, a clockwise torsional moment is exerted on an upper cross member and a lower cross member when seen from above the vehicle. This torsional moment is also transmitted to a link supporting portion which supports the upper cross member and the lower cross member. The link supporting portion is twisted to be deformed when the torsional moment is exerted on the link supporting portion.

The body frame of the vehicle described in Non-Patent Document 1 includes a right frame that extends in the front-and-rear direction of the vehicle to support vehicle mounted parts such as an engine, a rear suspension and the like and a left frame that extends in the front-and-rear direction of the vehicle to support left portions of the vehicle mounted parts. A front end of the right frame is welded to a right portion of the link supporting portion. A front end of the left frame is welded to a left portion of the link supporting portion. These right frame and left frame are large frames having great strength due to supporting the vehicle mounted parts that are relatively heavy materials. Namely, the right portion and the left portion of the link supporting portion are welded to the highly rigid right and left frames. Due to this, in the vehicle described Non-Patent Document 1, the torsional moment inputted into the link supporting portion can be borne by the highly rigid right and left frames.

In the vehicle described in Non-Patent Document 1, however, the right frame extends to the right from the right portion of the link supporting portion and is then curved to the rear, and the left frame extends to the left from the left portion of the link supporting portion and is then curved to the rear. The upper cross member and the lower cross member each have a rear element that is provided behind the link supporting portion. These rear elements easily interfere with the right frame and the left frame when the link mechanism is put into operation. Then, the upper cross member and the lower cross member are both attached to the link supporting portion in positions that are spaced greatly away from the welding portion between the right frame and the link supporting portion and the welding portion between the left frame and the link supporting portion in the up-and-down direction. This tends to increase the size of the vehicle in the up-and-down direction.

Then, an object of the invention is to provide a vehicle that can suppress the torsional deformation of a link supporting portion while suppressing the enlargement in size of the vehicle in an up-and-down direction.

According to the present invention said object is solved by a vehicle having the features of independent claim 1. Preferred embodiments are laid down in the dependent claims.

A vehicle according to the present teaching provides the following. (1) A vehicle having:
a body frame configured to lean to the right of the vehicle when the vehicle turns to the right and lean to the left of the vehicle when the vehicle turns to the left;
a right front wheel configured to turn about a right steering axis that extends in an up-and-down direction of the body frame;
a left front wheel provided on the left of the right front wheel in a left-and-right direction of the body frame and configured to turn about a left steering axis that is parallel to the right steering axis;
a right shock absorbing mechanism supporting the right front wheel at a lower portion and configured to absorb a displacement of the right front wheel towards an upper portion thereof in the up-and-down direction of the body frame;
a left shock absorbing mechanism supporting the left front wheel at a lower portion and configured to absorb a displacement of the left front wheel towards an upper portion thereof in the up-and-down direction of the body frame; and
a link mechanism supporting the right front wheel and the left front wheel so as to be displaced relative to each other in the up-and-down direction of the body frame,
wherein the link mechanism has:
   a right side member supporting an upper portion of the right shock absorbing mechanism so as to turn about the right steering axis;
   a left side member supporting an upper portion of the left shock absorbing mechanism so as to turn about the left steering axis;
   an upper cross member supporting an upper portion of the right side member at a right end portion thereof so as to turn about a right upper axis that extends in a front-and-rear direction of the body frame and an upper portion of the left side member at a left end portion thereof so as to turn about a left upper axis that is parallel to the right upper axis and supported on the body frame at a middle portion thereof so as to turn about a middle upper axis that is parallel to the right upper axis and the left upper axis; and
   a lower cross member supporting a lower portion of the right side member at a right end portion thereof so as to turn about a right lower axis that is parallel to the right upper axis and a lower portion of the left side member at a left end portion thereof so as to turn about a left lower axis that is parallel to the left upper axis and supported on the body frame at a middle portion thereof so as to turn about a middle lower axis that is parallel to the middle upper axis,
wherein the body frame has:
   a right frame that extends in at least a front-and-rear direction of the vehicle to support a right portion of a vehicle mounted part other than the body frame;
   a left frame that extends in at least the front-and rear direction of the vehicle to support a left portion of the vehicle mounted part other than the body frame; and
   a link supporting portion that is provided ahead of a front end of the right frame and a front end of the left frame to support the middle portion of the upper cross member and the middle portion of the lower cross member so as to turn,
wherein a turning supporting portion to which the middle portion of at least one of the upper cross member and the lower cross member is attached is provided at a rear portion of the link supporting portion,
wherein the body frame has a connecting portion connecting the front end of the right frame and the front end of the left frame together and a connecting bracket having monolithically an extending portion that extends to the front of the vehicle from the connecting portion and that is welded to the link supporting portion at a front end thereof, and
wherein when the vehicle is seen from the front thereof, a welding portion between the extending portion and the link supporting portion is positioned on an imaginary central straight line that passes through the middle upper axis and the middle lower axis above or below the turning supporting portion in the up-and-down direction of the body frame.

At least one of the upper cross member and the lower cross member attached to the turning supporting portion is called simply a rear cross member. This rear cross member turns about the middle upper axis or the middle lower axis that extends in the front-an-rear direction of the body frame. According to the vehicle of the present teaching, the welding portion between the extending portion and the link supporting portion is positioned on the imaginary central straight line that passes through the middle upper axis and the middle lower axis above or below the turning supporting portion in the up-and-down direction of the body frame. This makes it difficult for the rear cross member and the extending portion to be brought into interference with each other, and therefore, the rear cross member can be disposed close to the turning supporting portion in relation to the up-and-down direction of the body frame while avoiding the interference thereof with the extending portion. As a result, the link supporting portion can be made compact in dimension in the up-and-down direction of the body frame. In this way, the extending portion and the turning supporting portion can be disposed close to each other in relation to the up-and-down direction of the body frame, whereby the welding portion can be provided in the position lying near the turning supporting portion. The extending portion is connected to the highly rigid right and left frames via the connecting portion. This allows a portion of torsional moment inputted from the rear cross member to be released to the right frame and the left frame, thereby making it possible to reduce torsional moment that is inputted into the link supporting portion. This can suppress the torsional deformation of the link supporting portion while suppressing the enlargement in size of the vehicle in the up-and-down direction.
(2) In the vehicle according to the present teaching, the middle portion of the lower cross member may be attached to the turning supporting portion so as to turn, and the welding portion may be provided below the turning supporting portion in the up-and-down direction of the body frame.
   According to the vehicle of the present teaching, a greater force is easily exerted on the lower cross member from the front wheel than from the upper cross member. Then, it is possible to suppress the torsional deformation of the link supporting portion more effectively by providing the welding portion near the turning supporting portion into which great torsional moment is inputted from the lower cross member.
(3) In the vehicle according to the present teaching, a front portion of the extending portion may be positioned between a right edge of a right welding portion where the right frame and the connecting bracket are welded together and a left edge of a left welding portion where the left frame and the connecting bracket are welded together in a left-and-right direction of the body frame.
   According to the vehicle of the present teaching, the extending portion is easily disposed in the position lying near the upper cross member or the lower cross member while avoiding the interference with the upper cross member or the lower cross member more effectively, thereby making it easy to suppress the enlargement in size of the vehicle.
(4) In the vehicle according to the present teaching, when the vehicle is seen from a side thereof, the front end of the right frame and the front end of the left frame may be positioned behind a rear end of a movable range of the upper cross member or a rear end of a movable range of the lower cross member on an extension of the middle upper axis or the middle lower axis, and at least a portion of the extending portion may be positioned ahead of the rear end of the movable range.
   Being different from the present teaching, when the right frame and the left frame are welded directly to the link supporting portion, the upper cross member or the lower cross member has to be disposed in a position spaced away from the right frame and the left frame in the up-and-down direction. This is because the interference of the upper cross member or the lower cross member with the right frame and the left frame is to be avoided. In the vehicle of the present teaching, however, since the extending portion can be provided in the position lying near the turning axis of the upper cross member or the lower cross member, the extending portion can be provided in the position lying near the upper cross member or the lower cross member in the up-and-down direction while avoiding the interference of the extending portion with the upper cross member or the lower cross member. This can suppress the enlargement in size of the vehicle in the up-and-down direction.
(5) In the vehicle according to the present teaching, the turning supporting portion is monolithic with the connecting bracket.
   According to the vehicle of the present teaching, the number of parts can be reduced.
(6) In the vehicle according to the present teaching, the connecting portion may have:
   a right wall portion connecting a front portion of the right frame and a rear portion of the extending portion together;
   a left wall portion connecting a front portion of the left frame and the rear portion of the extending portion together;
   a rear wall portion connecting the front portion of the right frame and the front portion of the left frame together; and
   a lower wall portion connecting a lower portion of the right wall portion, a lower portion of the left wall portion and a lower portion of the rear wall portion together or an upper wall portion connecting an upper portion of the right wall portion, an upper portion of the left wall portion and an upper portion of the rear wall portion together, and
   a second space that opens upwards or downwards may be formed by a rear portion of the extending portion, the right wall portion, the left wall portion, the rear wall portion, the lower wall portion or the upper wall portion.

   According to the vehicle of the present teaching, forming the second space in the connecting bracket can reduce the weight thereof.
(7) In the vehicle according to the present teaching, when the vehicle is seen from thereabove, a front portion of the right wall portion may be positioned on the left of a rear portion thereof, and a front portion of the left wall portion may be positioned on the right of a rear portion thereof.
   According to the vehicle of the present teaching, the front portion of the right wall portion and the front portion of the left wall portion can be disposed close to the upper cross member or the lower cross member while avoiding an interference thereof with the upper cross member or the lower cross member, thereby making it easy to suppress the enlargement in size of the vehicle.
(8) In the vehicle according to the present teaching, the right frame may have:
   a right upper frame extending in at least the front-and-rear direction of the vehicle; and
   a right lower frame provided below the right upper frame and extending in the front-and-rear direction of the vehicle,
   the left frame may have:
      a left upper frame extending in at least the front-and-rear direction of the vehicle; and
      a left lower frame provided below the left upper frame and extending in the front-and-rear direction of the vehicle,
   a front portion of the right upper frame and a front portion of the left upper frame may be connected to an upper portion of the link supporting portion via an upper bracket,
   the upper bracket may have a right upper insertion hole into which the front portion of the right upper frame is inserted and a left upper insertion hole into which a front portion of the left upper frame is inserted,
   the connecting bracket may have a right lower insertion hole into which a front portion of the right lower frame is inserted and a left lower insertion hole into which a front portion of the left lower frame is inserted, and
   the upper bracket and the connecting bracket may be connected together by a right vertical frame extending in the up-and-down direction of the body frame and a left vertical frame extending in the up-and-down direction of the body frame and provided on the left of the right vertical frame.

   According to the vehicle of the present teaching, the connecting strength of the upper bracket and the connecting bracket is enhanced by the right vertical frame and the left vertical frame, thereby making it easy to fix relative positions thereof to the right upper insertion hole, the left upper insertion hole, the right lower insertion hole and the left lower insertion hole. This enhances the working efficiency in inserting the respective front portions of the frames into the corresponding insertion holes.
(9) In the vehicle according to the present teaching, in relation to a left-and-right direction of the vehicle, a right end of the extending portion may be positioned on the left of a right end of the link supporting portion, and a left end of the extending portion may be positioned on the right of a left end of the link supporting portion.

According to the vehicle of the present teaching, in relation to the left-and-right direction of the body frame, since the extending portion is thinner than the link supporting portion, it becomes easier to avoid the interference of the extending portion with the upper cross member and the lower cross member.

### BRIEF DESCRIPTION OF DRAWINGS

Fig. 1 is a side view showing the whole of a vehicle according to a preferred embodiment as seen from a left side thereof.
Fig. 2 is a front view showing a front part of the vehicle shown in Fig. 1.
Fig. 3 is a side view showing a left shock absorbing device and a left front wheel.
Fig. 4 is a plan view showing the front part of the vehicle shown in Fig. 1.
Fig. 5 is a plan view showing the front part of the vehicle shown in Fig. 1 when the vehicle is steered.
Fig. 6 is a front view showing the front part of the vehicle shown in Fig. 1 when the vehicle is caused to lean.
Fig. 7 is a front view showing the front part of the vehicle shown in Fig. 1 when the vehicle is caused to lean while being steered.
Fig. 8 is a perspective view of a body frame.
Fig. 9 is a sectional view of a link supporting portion.
Fig. 10 is a side view of a connecting bracket.
Fig. 11 is a top view of the connecting bracket.
Fig. 12 is a front view of the connecting bracket.
Fig. 13 is a rear view of the connecting bracket.

### MODE FOR CARRYING OUT THE INVENTION

Referring to the accompanying drawings, a preferred embodiment will be described in detail below.

In the accompanying drawings, an arrow F denotes a forward direction of a vehicle. An arrow B denotes a rearward direction of the vehicle. An arrow U denotes an upward direction of the vehicle. An arrow D denotes a downward direction of the vehicle. An arrow R denotes a rightward direction of the vehicle. An arrow L denotes a leftward direction of the vehicle.

A vehicle turns with a body frame being caused to lean to the left or right of the vehicle from a vertical direction. Then, in addition to the directions relative to the vehicle, directions relative to the body frame are defined. In the accompanying drawings, an arrow FF denotes a forward direction of the body frame. An arrow FB denotes a rearward direction of the body frame. An arrow FU denotes an upward direction of the body frame. An arrow FD denotes a downward direction of the body frame. An arrow FR denotes a rightward direction of the body frame. An arrow FL denotes a leftward direction of the body frame.

In this specification, a "front-and-rear direction of the body frame," a "left-and-right direction of the body frame" and an "up-and-down direction of the body frame" mean a front-and-rear direction, a left-and-right direction and an up-and-down direction based on the body frame as viewed from a rider who rides the vehicle. A "side of the body frame" means a right side of the body frame or a left side of the vehicle body.

In this specification, "extending in the front-and-rear direction of the body frame" includes extending in the front-and-rear direction of the body frame while being inclined with respect to the front-and-rear direction of the body frame and means extending in the front-and-rear direction of the body frame while being inclined more towards the front-to-rear direction than towards the left-to-right direction and the up-to-down direction of the body frame.

In this specification, "extending in the left-and-right direction of the body frame" includes extending in the left-and-right direction of the body frame while being inclined with respect to the left-and-right direction of the body frame and means extending in the left-and-right direction of the body frame while being inclined more towards the left-and-right direction than towards the front-and-rear direction and the up-and-down direction of the body frame.

In this description, "extending in the up-and-down direction of the body frame" includes extending in the up-and-down direction of the body frame while being inclined with respect to the up-and-down direction of the body frame and means extending in the up-and-down direction of the body frame while being inclined more towards the up-and-down direction than towards the front-and-rear direction and the left-and-right direction of the body frame.

In this description, an "upright state of the vehicle" or the "vehicle stands upright" means a state in which the vehicle remains not steered and the up-and-down direction of the body frame coincides with a vertical direction. In this state, the direction based on the vehicle coincides with the direction based on the body frame. When the vehicle is turning with the body frame caused to lean to the left or right from the vertical direction, the left-and-right direction of the vehicle does not coincide with the left-and-right direction of the body frame. The up-and-down direction of the vehicle does not coincide with the up-and-down direction of the body frame. However, the front-and-rear direction of the vehicle coincides with the front-and-rear direction of the body frame.

In this description, "rotation or rotating" means that a member is displaced at an angle of 360 degrees or more about a center axis thereof. In this description, "turn or turning" means that a member is displaced at an angle of less than 360 degrees about a center axis thereof.

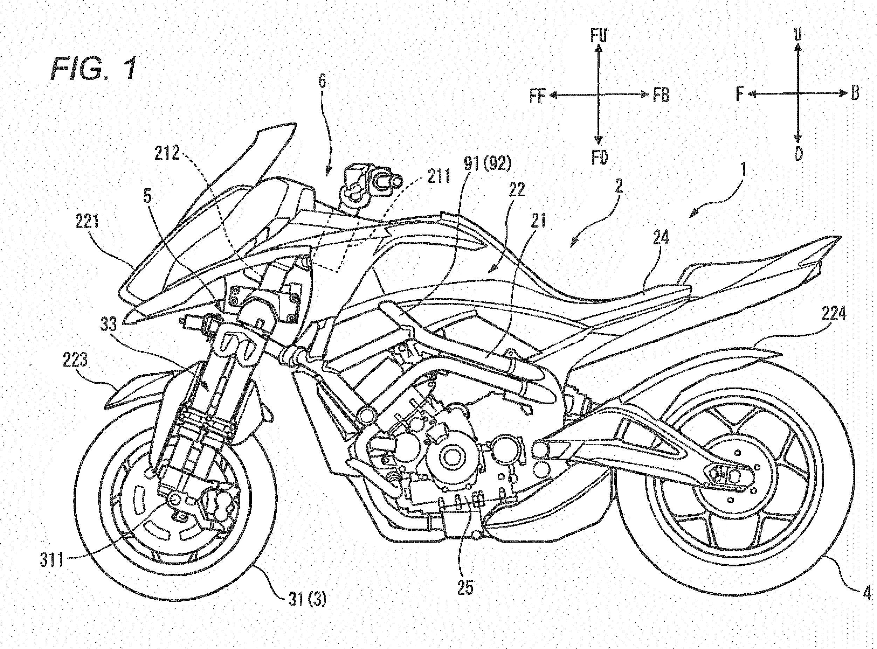

Referring to Figs. 1 to 7, a vehicle 1 according to a preferred embodiment will be described. A vehicle 1 is a vehicle that is driven by means of power generated from a power source and that includes a body frame that can lean and two front wheels which are aligned side by side in a left-and-right direction of the body frame.

Fig. 1 is a left side view of the whole of the vehicle 1 as viewed from the left thereof. The vehicle 1 includes a vehicle main body portion 2, a pair of left and right front wheels 3, a rear wheel 4, a link mechanism 5 and a steering force transmission mechanism 6.

The vehicle main body portion 2 includes a body frame 21, a body cover 22, a seat 24 and an engine unit 25. In Fig. 1, the vehicle 1 is in an upright state. The following description which will be made by reference to Fig. 1 is based on the premise that the vehicle 1 is standing in the upright state.

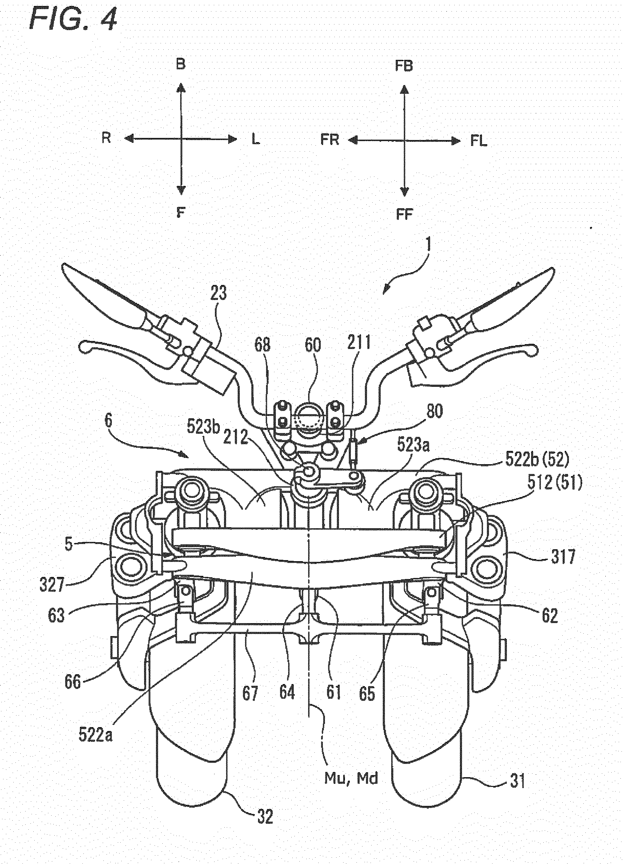

The body frame 21 extends in a front-and-rear direction of the vehicle 1. The body frame 21 includes a headpipe 211 (refer to Fig. 4: an example of a rear shaft supporting portion) and a link supporting portion 212 (refer to Fig. 4: an example of a front shaft supporting portion).

The headpipe 211 supports an upstream side steering shaft 60, which will be described later, so as to turn. The headpipe 211 extends in an up-and-down direction of the body frame 21. The link supporting portion 212 is provided ahead of the headpipe 211 in the front-and-rear direction of the vehicle 1. The link supporting portion 212 supports the link mechanism 5 so as to turn.

The body frame 21 supports the engine unit 25 behind the headpipe 211 in the front-and-rear direction of the vehicle 1. The engine unit 25 supports the rear wheel 4 so as to swing up and down. The engine unit 25 includes a power source such as an engine or an electric motor with a battery and a device such as a transmission. The power source generates force for driving the vehicle 1.

The body cover 22 includes a front cover 221, a pair of left and right front fenders 223 and a rear fender 224. The body cover 22 is a body part which covers at least part of body parts which are mounted on the vehicle 1 such as the pair of left and right front wheels 3, the body frame 21, the link mechanism 5 and the like.

The front cover 221 is disposed ahead of the seat 24. The front cover 221 covers the link mechanism 5 and at least part of the steering force transmission mechanism 6.

At least portions of the pair of left and right front fenders 223 are both disposed directly below the front cover 221. At least portions of the pair of left and right front fenders 223 are disposed directly above the pair of left and right front wheels 3, respectively.

At least a portion of the rear fender 224 is disposed directly above the rear wheel 4.

At least portions of the pair of left and right front wheels 3 are disposed directly below the front cover 221.

At least a portion of the rear wheel 4 is disposed below the seat 24. At least a portion of the rear wheel 4 is disposed directly below the rear fender 224.

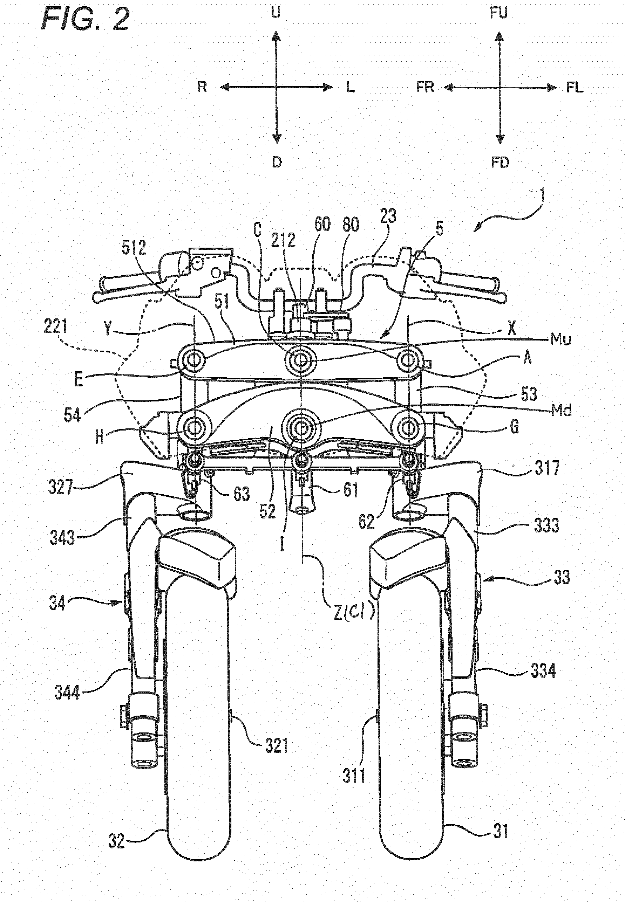

Fig. 2 is a front view of the front part of the vehicle 1 as viewed from the front of the body frame 21. In Fig. 2, the vehicle 1 is standing in the upright state. The following description which will be made by reference to Fig. 2 is based on the premise that the vehicle 1 is standing in the upright state. Fig. 2 shows the front part of the vehicle 1 as it were seen through the front cover 221 that is indicated by dashed lines.

The pair of left and right front wheels 3 include a left front wheel 31 and a right front wheel 32. The left front wheel 31 and the right front wheel 32 are provided so as to be aligned side by side in a left-and-right direction of the body frame 21. The right front wheel 32 is provided on the right of the left front wheel 31 on the body frame 21.

The vehicle 1 includes a left shock absorbing device 33, a right shock absorbing device 34, a left bracket 317 and a right bracket 327.

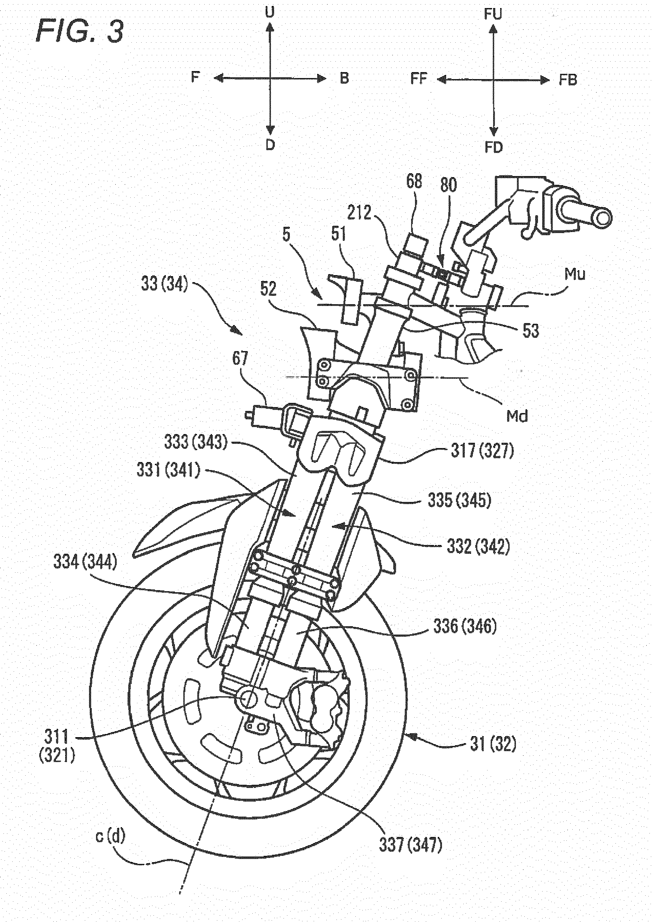

Fig. 3 is a side view showing the left shock absorbing device 33 and the left front wheel 31. The right shock absorbing device 34 and the left shock absorbing device 33 are constructed laterally symmetrical with each other, and therefore, reference numerals denoting the right shock absorbing device 34 are also written in Fig. 3. As shown in Fig. 3, the left shock absorbing device 33 is a so-called telescopic shock absorbing device. The left shock absorbing device 33 has a left front telescopic element 331, a left rear telescopic element 332 and a left inner connecting element 337.

The left front telescopic element 331 has a left front outer tube 333 and a left front inner tube 334. A lower portion of the left front inner tube 334 is connected to the left inner connecting element 337. An upper portion of the left front inner tube 334 is inserted into the left front outer tube 333. An upper portion of the left front outer tube 333 is connected to the left bracket 317. The left front inner tube 334 is displaced relative to the left front outer tube 333 along a left extension and contraction axis c that extends in the up-and-down direction of the body frame 21. The left front telescopic element 331 can extend and contract in the direction of the left extension and contraction axis c as a result of the left front inner tube 334 being displaced relative to the left front outer tube 333 along the left extension and contraction axis c.

At least a portion of the left rear telescopic element 332 is provided behind the left front telescopic element 331. The left rear telescopic element 332 has a left rear outer tube 335 and a left rear inner tube 336. The left rear outer tube 335 and the left front outer tube 333 are connected together so as not to move. A lower portion of the left rear inner tube 336 is connected to the left inner connecting element 337. An upper portion of the left rear inner tube 336 is inserted into the left rear outer tube 335. An upper portion of the left rear outer tube 335 is connected to the left bracket 317. The left rear inner tube 336 is displaced relative to the left rear outer tube 335 along the left extension and contraction axis c that extends in the up-and-down direction of the body frame 21. The left rear telescopic element 332 can extend and contract in the direction of the left extension and contraction axis c as a result of the left rear inner tube 336 being displaced relative to the left rear outer tube 335 along the left extension and contraction axis c.

The left inner connecting element 337 supports a left axle member 311 of the left front wheel 31 rotatably. The left inner connecting element 337 connects a lower portion of the left front inner tube 334 and a lower portion of the left rear inner tube 336 together.

The left shock absorbing device 33 attenuates or absorbs a displacement of the left front wheel 31 relative to the left front outer tube 333 and the left rear outer tube 335 along the left extension and contraction axis c by an extending or contracting action of the left front telescopic element 331 and an extending or contracting action of the left rear telescopic element 332.

As shown in Fig. 3, the right shock absorbing device 34 is a so-called telescopic shock absorbing device. The right shock absorbing device 34 has a right front telescopic element 341, a right rear telescopic element 342 and a right inner connecting element 347.

The right front telescopic element 341 has a right front outer tube 343 and a right front inner tube 344. A lower portion of the right front inner tube 344 is connected to the right inner connecting element 347. An upper portion of the right front inner tube 344 is inserted into the right front outer tube 343. An upper portion of the right front outer tube 343 is connected to the right bracket 327. The right front inner tube 344 is displaced relative to the right front outer tube 343 along a right extension and contraction axis d that extends in the up-and-down direction of the body frame 21. The right front telescopic element 341 can extend and contract in the direction of the right extension and contraction axis d as a result of the right front inner tube 344 being displaced relative to the right front outer tube 343 along the right extension and contraction axis d.

At least a portion of the right rear telescopic element 342 is provided behind the right front telescopic element 341. The right rear telescopic element 342 has a right rear outer tube 345 and a right rear inner tube 346. The right rear outer tube 345 and the right front outer tube 343 are connected together so as not to move. A lower portion of the right rear inner tube 346 is connected to the right inner connecting element 347. An upper portion of the right rear inner tube 346 is inserted into the right rear outer tube 345. An upper portion of the right rear outer tube 345 is connected to the right bracket 327. The right rear inner tube 346 is displaced relative to the right rear outer tube 345 along the right extension and contraction axis d that extends in the up-and-down direction of the body frame 21. The right rear telescopic element 342 can extend and contract in the direction of the right extension and contraction axis d as a result of the right rear inner tube 346 being displaced relative to the right rear outer tube 345 along the right extension and contraction axis d.

The right inner connecting element 347 supports a right axle member 321 of the right front wheel 32 rotatably. The right inner connecting element 347 connects a lower portion of the right front inner tube 344 and a lower portion of the right rear inner tube 346 together.

The right shock absorbing device 34 attenuates or absorbs the displacement of the right front wheel 32 relative to the right front outer tube 343 and the right rear outer tube 345 along the right extension and contraction axis d by an extending or contracting action of the right front telescopic element 341 and an extending or contracting action of the right rear telescopic element 342.

As shown in Fig. 4, the vehicle 1 includes the steering force transmission mechanism 6. The steering force transmission mechanism 6 includes a handlebar 23 (an example of a steering force input portion), the upstream side steering shaft 60 (an example of a rear shaft member), a connecting member 80, and a downstream side steering shaft 68 (an example of a front shaft member).

The body frame 21 includes the headpipe 211 that supports the upstream side steering shaft 60 so as to turn and the link supporting portion 212 that supports the downstream side steering shaft 68 so as to turn. As shown in Fig. 2, the link supporting portion 212 extends in the direction of a middle steering axis Z that extends in the up-and-down direction of the body frame 21. In this embodiment, a turning center (a central steering axis) of the handlebar 23 coincides with a turning center (a rear axis) of the upstream side steering shaft.

A steering force is inputted into the handlebar 23. The upstream side steering shaft 60 is connected to the handlebar 23. An upper portion of the upstream side steering shaft 60 is situated behind a lower portion of the upstream side steering shaft 60 in a front-and-rear direction of the body frame 21. The upstream side steering shaft 60 is supported in the headpipe 211 so as to turn therein.

The connecting member 80 connects the upstream side steering shaft 60 and the downstream side steering shaft 68 together. The connecting member 80 is displaced as the upstream side steering shaft 60 turns. The connecting member 80 transmits the turning of the upstream side steering shaft 60 to the downstream side steering shaft 68.

The downstream side steering shaft 68 is supported in the link supporting portion 212 so as to turn therein. The downstream side steering shaft 68 is connected to the connecting member 80. The downstream side steering shaft 68 is provided ahead of the upstream side steering shaft 60 in the front-and-rear direction of the body frame 21. The downstream side steering shaft 68 turns as the connecting member 80 is displaced. As a result of the downstream side steering shaft 68 turning, the left front wheel 31 and the right front wheel 32 are steered or turned via a tie-rod 67.

The steering force transmission mechanism 6 transmits a steering force exerted on a handlebar 23 by the rider when operating the handlebar 23 to the left bracket 317 and the right bracket 327. A specific configuration will be described in detail later.

In the vehicle 1 according to this embodiment, the link mechanism 5 adopts a four parallel joint link system (also referred to as a parallelogram link).

As shown in Fig. 2, the link mechanism 5 is disposed above the left front wheel 31 and the right front wheel 32. The link mechanism 5 includes an upper cross member 51, a lower cross member 52, a left side member 53 and a right side member 54. The link mechanism 5 is supported so as to turn by the link supporting portion 212 that extends in the direction of the middle steering axis Z. Even though the upstream side steering shaft 60 is turned as a result of the operation of the handlebar 23, the link mechanism 5 is prevented from following the rotation of the upstream side steering shaft 60 and hence does not turn.

The upper cross member 51 includes a plate member 512. The plate member 512 is disposed ahead of the link supporting portion 212. The plate member 512 extends in a left-and-right direction of the body frame 21.

A middle portion of the upper cross member 51 is connected to the link supporting portion 212 by a connecting portion C. The upper cross member 51 can turn relative to the link supporting portion 212 about a middle upper axis Mu that passes through the connecting portion C to extend in the front-and-rear direction of the body frame 21.

A left end portion of the upper cross member 51 is connected to the left side member 53 by a connecting portion A. The upper cross member 51 can turn relative to the left side member 53 about a left upper axis which passes through the connecting portion A to extend in the front-and-rear direction of the body frame 21.

A right end portion of the upper cross member 51 is connected to the right side member 54 by a connecting portion E. The upper cross member 51 can turn relative to the right side member 54 about a right upper axis that passes through the connecting portion E to extend in the front-and-rear direction of the body frame 21.

Fig. 4 is a plan view of the front part of the vehicle 1 as seen from above the body frame 21. In Fig. 4, the vehicle 1 is standing in the upright state. The following description which will be made by reference to Fig. 4 is based on the premise that the vehicle 1 is standing in the upright state.

As shown in Fig. 4, the lower cross member 52 includes a front plate member 522a and a rear plate member 522b. The front plate member 522a is disposed ahead of the link supporting portion 212. The rear plate member 522b is disposed behind the link supporting portion 212. The front plate member 522a and the rear plate member 522b extend in the left-and-right direction of the body frame 21. The front plate member 522a and the rear plate member 522b are connected together by a left connecting block 523a and a right connecting block 523b. The left connecting block 523a is disposed on the left of the link supporting portion 212. The right connecting block 523b is disposed on the right of the link supporting portion 212.

Returning to Fig. 2, the lower cross member 52 is disposed below the upper cross member 51. The lower cross member 52 extends parallel to the upper cross member 51. A middle portion of the lower cross member 52 is connected to the link supporting portion 212 by a connecting portion I. The lower cross member 52 can turn about a middle down or lower axis Md that passes through the connecting portion I to extend in the front-and-rear direction of the body frame 21.

A left end portion of the lower cross member 52 is connected to the left side member 53 by a connecting portion G. The lower cross member 52 can turn about a left lower axis which passes through the connecting portion G to extend in the front-and-rear direction of the body frame 21.

A right end portion of the lower cross member 52 is connected to the right side member 54 by a connecting portion H. The lower cross member 52 can turn about a right lower axis which passes through the connecting portion H to extend in the front-and-rear direction of the body frame 21. A length of the upper cross member 51 from the connecting portion E to the connecting portion A is substantially equal to a length of the lower cross member from the connecting portion H to the connecting portion G.

The middle upper axis Mu, the right upper axis, the left upper axis, the middle lower axis Md, the right lower axis and the left lower axis extend parallel to one another. The middle upper axis Mu, the right upper axis, the left upper axis, the middle lower axis Md, the right lower axis and the left lower axis are disposed above the left front wheel 31 and the right front wheel 32.

As shown in Figs. 2 and 4, the left side member 53 is disposed on the left of the link supporting portion 212. The left side member 53 is disposed above the left front wheel 31. The left side member 53 extends parallel to the middle steering axis Z of the link supporting portion 212. An upper portion of the left side member 53 is disposed behind a lower portion thereof.

A lower portion of the left side member 53 is connected to the left bracket 317. The left bracket 317 can turn about a left steering axis X relative to the left side member 53. The left steering axis X extends parallel to the middle steering axis Z of the link supporting portion 212.

As shown in Figs. 2 and 4, the right side member 54 is disposed on the right of the link supporting portion 212. The right side member 54 is disposed above the right front wheel 32. The right side member 54 extends parallel to the middle steering axis Z of the link supporting portion 212, An upper portion of the right side member 54 is disposed behind a lower portion thereof.

A lower portion of the right side member 54 is connected to the right bracket 327. The right bracket 327 can turn about a right steering axis Y relative to the right side member 54. The right steering axis Y extends parallel to the middle steering axis Z of the link supporting portion 212.

Thus, as has been described above, the upper cross member 51, the lower cross member 52, the left side member 53 and the right side member 54 are supported by the link supporting portion 212 so that the upper cross member 51 and the lower cross member 52 are held in postures which are parallel to each other and so that the left side member 53 and the right side member 54 are held in postures which are parallel to each other.

As shown in Figs. 2 and 4, the steering force transmission mechanism 6 includes a middle transmission plate 61, a left transmission plate 62, a right transmission plate 63, a middle joint 64, a left joint 65, a right joint 66, and the tie-rod 67.

The middle transmission plate 61 is connected to a lower portion of the downstream side steering shaft 68. The middle transmission plate 61 cannot turn relative to the downstream side steering shaft 68. The middle transmission plate 61 can turn about the middle steering axis Z relative to the link supporting portion 212.

The left transmission plate 62 is disposed on the left of the middle transmission plate 61. The left transmission plate 62 is connected to the left bracket 317. The left transmission plate 62 cannot turn relative to the left bracket 317. The left transmission plate 62 can turn about the left steering axis X relative to the left side member 53.

The right transmission plate 63 is disposed on the right of the middle transmission plate 61. The right transmission plate 63 is connected to the right bracket 327. The right transmission plate 63 cannot turn relative to the right bracket 327. The right transmission plate 63 can turn about the right steering axis Y relative to the right side member 54.

As shown in Fig. 4, the middle joint 64 is connected to a front portion of the middle transmission plate 61 via a shaft portion that extends in the up-and-down direction of the body frame 21. The middle transmission plate 61 and the middle joint 64 are allowed to turn relative to each other about this shaft portion.

The left joint 65 is disposed on the left of the middle joint 64. The left joint 65 is connected to a front portion of the left transmission plate 62 via a shaft that extends in the up-and-down direction of the body frame. The left transmission plate 62 and the left joint 65 are allowed to turn relative to each other about this shaft portion.

The right joint 66 is disposed on the right of middle joint 64. The right joint 66 is connected to a front portion of the right transmission plate 63 via a shaft that extends in the up-and-down direction of the body frame. The right transmission plate 63 and the right joint 66 are allowed to turn relative to each other about this shaft portion.

A shaft portion that extends in the front-and-rear direction of the body frame 21 is provided at a front portion of the middle joint 64. A shaft portion that extends in the front-and-rear direction of the body frame 21 is provided at a front portion of the left joint 65. A shaft portion that extends in the front-and-rear direction of the body frame 21 is provided at a front portion of the right joint 66.

The tie-rod 67 extends in the left-and-right direction of the body frame 21. The tie-rod 67 is connected to the middle joint 64, the left joint 65 and the right joint 66 via those shaft portions. The tie-rod 67 and the middle joint 64 can turn relative to each other about the shaft portion that is provided at the front portion of the middle joint 64. The tie-rod 67 and the left joint 65 can turn relative to each other about the shaft portion that is provided at the front portion of the left joint 65. The tie rod 67 and the right joint 66 can turn relative to each other about the shaft portion that is provided at the front portion of the right joint 66.

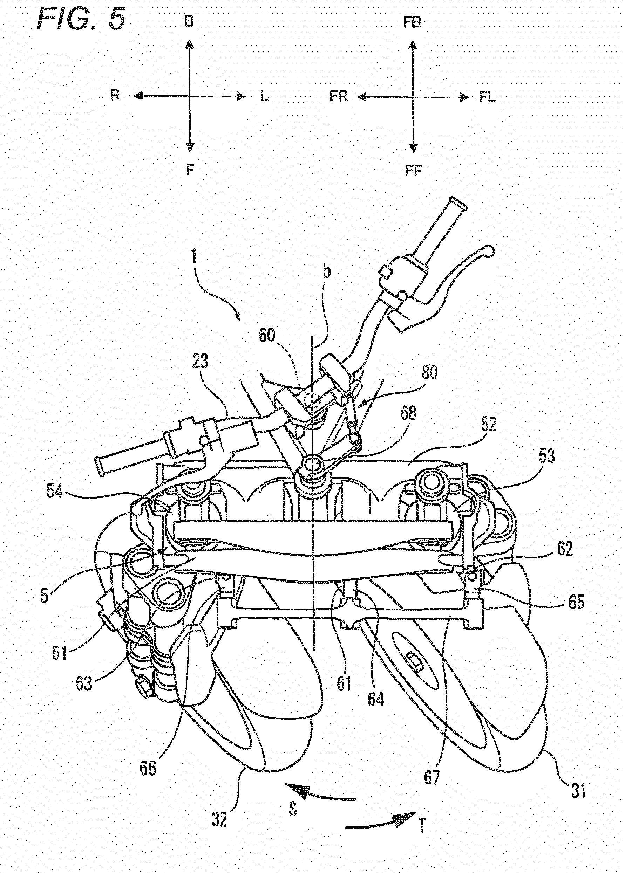

Next, referring to Figs. 4 and 5, a steering operation of the vehicle 1 will be described. Fig. 5 is a plan view, as seen from above the body frame 21, of the front part of the vehicle 1 with the left front wheel 31 and the right front wheel 32 turned to the left.

When the rider operates the handlebar 23, the upstream side steering shaft 60 turns. The turn of the upstream side steering shaft 60 is transmitted to the downstream side steering shaft 68 via the connecting member 80. The downstream side steering shaft 68 turns relative to the link supporting portion 212 about a front steering axis b. In the case of the left front wheel 31 and the right front wheel 32 being turned to the left as shown in Fig. 5, as the handlebar 23 is operated, the middle transmission plate 61 turns relative to the link supporting portion 212 in a direction indicated by an arrow T about the front steering axis b.

In association with the turning of the middle transmission plate 61 in the direction indicated by the arrow T, the middle joint 64 of the tie-rod 67 turns relative to the middle transmission plate 61 in a direction indicated by an arrow S. This moves the tie-rod 67 left rear with its posture kept unchanged.

As the tie-rod 67 moves left rear, the left joint 65 and the right joint 66 of the tie-rod 67 turn in the direction indicated by the arrow S relative to the left transmission plate 62 and the right transmission plate 63, respectively. This causes the left transmission plate 62 and the right transmission plate 63 to turn in the direction indicated by the arrow T with the tie rod 67 maintaining its posture unchanged.

When the left transmission plate 62 turns in the direction indicated by the arrow T, the left bracket 317, which cannot turn relative to the left transmission plate 62, turns in the direction indicated by the arrow T about the left steering axis X relative to the left side member 53.

When the right transmission plate 63 turns in the direction indicated by the arrow T, the right bracket 327, which cannot turn relative to the right transmission plate 63, turns in the direction indicated by the arrow T about the right steering axis Y relative to the right side member 54.

When the left bracket 317 turns in the direction indicated by the arrow T, the left shock absorbing device 33, which is connected to the left bracket 317 via the left front outer tube 333 and the left rear outer tube 335, turns in the direction indicated by the arrow T about the left steering axis X relative to the left side member 53. When the left shock absorbing device 33 turns in the direction indicated by the arrow T, the left front wheel 31, which is supported on the left shock absorbing device 33, turns in the direction indicated by the arrow T about the left steering axis X relative to the left side member 53.

When the right bracket 327 turns in the direction indicated by the arrow T, the right shock absorbing device 34, which is connected to the right bracket 327 via the right front outer tube 343 and the right rear outer tube 345, turns in the direction indicated by the arrow T about the right steering axis Y relative to the right side member 54. When the right shock absorbing device 34 turns in the direction indicated by the arrow T, the right front wheel 32, which is supported on the right shock absorbing device 34, turns in the direction indicated by the arrow T about the right steering axis Y relative to the right side member 54.

When the rider operates the handlebar 23 so as to turn the left front wheel 31 and the right front wheel 32 to the right, the elements described above turn in the direction indicated by the arrow S. Since the elements move the other way around in relation to the left-and-right direction, the detailed description thereof will be omitted here.

Thus, as has been described heretofore, as the rider operates the handlebar 23, the steering force transmission mechanism 6 transmits the steering force accordingly to the left front wheel 31 and the right front wheel 32. The left front wheel 31 and the right front wheel 32 turn about the left steering axis X and the right steering axis Y, respectively, in the direction corresponding to the direction in which the handlebar 23 is operated by the rider.

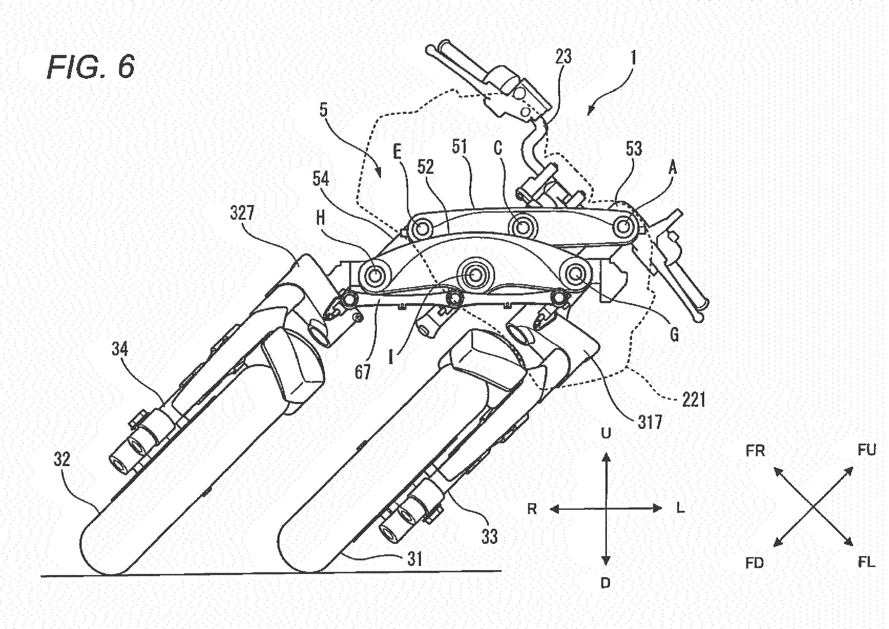

Next, referring to Figs. 2 and 6, a leaning operation of the vehicle 1 will be described. Fig. 6 is a front view of the front part of the vehicle 1 as viewed from the front of the body frame 21, showing a state where the body frame 21 leans to the left of the vehicle 1. Fig. 6 shows a state in which the front part of the vehicle 1 is seen as through the front cover 221 which is indicated by dashed lines.

As shown in Fig. 2, with the vehicle 1 standing in the upright state, when looking at the vehicle 1 from the front of the body frame 21, the link mechanism 5 looks like having a rectangular shape. As shown in Fig. 6, with the vehicle 1 leaning to the left, when looking at the vehicle 1 from the front of the body frame 21, the link mechanism 5 looks like having a parallelogram shape. The deformation of the link mechanism 5 is associated with the leaning of the body frame 21 in the left-and-right direction of the vehicle 1. The operation of the link mechanism 5 means that the upper cross member 51, the lower cross member 52, the left side member 53 and the right side member 54 that make up the link mechanism 5 turn relatively about turning axes which pass through the corresponding connecting portions A, C, E, G, H, I, whereby the shape of the link mechanism 5 changes.

For example, as shown in Fig. 6, when the rider causes the vehicle 1 to lean to the left, the link supporting portion 212 leans to the left from the vertical direction. When the link supporting portion 212 leans, the upper cross member 51 turns counterclockwise as seen from the front of the vehicle 1 about the middle upper axis Mu that passes through the connecting portion C relative to the link supporting portion 212. Similarly, the lower cross member 52 turns counterclockwise as seen from the front of the vehicle 1 about the middle lower axis Md that passes through the connecting portion I relative to the link supporting portion 212. This causes the upper cross member 51 to move to the left relative to the lower cross member 52.

As the upper cross member 51 moves to the left, the upper cross member 51 turns counterclockwise as seen from the front of the vehicle 1 about the left upper axis that passes through the connecting portion A and the right upper axis that passes through the connecting portion E relative to the left side member 53 and the right side member 54, respectively. Similarly, the lower cross member 52 turns counterclockwise as seen from the front of the vehicle 1 about the left lower axis that passes through the connecting portion G and the right lower axis that passes through the connecting portion H relative to the left side member 53 and the right side member 54, respectively. This causes the left side member 53 and the right side member 54 to lean to the left from the vertical direction with their postures kept parallel to the link supporting portion 212.

As this occurs, the lower cross member 52 moves to the left relative to the tie- rod 67. As the lower cross member 52 moves to the left, the shaft portions that are provided at the respective front portions of the middle joint 64, the left joint 65 and the right joint 66 turn relative to the-tie rod 67. This allows the tie-rod 67 to hold a parallel posture to the upper cross member 51 and the lower cross member 52.

As the left side member 53 leans to the left, the left bracket 317, which is connected to the left side member 53, leans to the left. As the left bracket 317 leans to the left, the left shock absorbing device 33, which is connected to the left bracket 317, leans to the left. As the left shock absorbing device 33 leans to the left, the left front wheel 31, which is supported on the left shock absorbing device 33, leans to the left with its posture kept parallel to the link supporting portion 212.

As the right side member 54 leans to the left, the right bracket 327, which is connected to the right side member 54, leans to the left. As the right bracket 327 leans to the left, the right shock absorbing device 34, which is connected to the right bracket 327, leans to the left. As the right shock absorbing device 34 leans to the left, the right front wheel 32, which is supported on the right shock absorbing device 34, leans to the left with its posture kept parallel to the link supporting portion 212.

The leaning operations of the left front wheel 31 and the right front wheel 32 are described based on the vertical direction. However, when the vehicle 1 leans (when the link mechanism 5 is activated to operate), the up-and-down direction of the body frame 21 does not coincide with the vertical up-and-down direction. In a case where the leaning operations are described based on the up-and-down direction of the body frame 21, when the link mechanism 5 is activated to operate, the relative positions of the left front wheel 31 and the right front wheel 32 to the body frame 21 change. In other words, the link mechanism 5 changes the relative positions of the left front wheel 31 and the right front wheel 32 to the body frame 21 in the up-and-down direction of the body frame 21 to thereby cause the body frame 21 to lean relative to the vertical direction.

When the rider causes the vehicle 1 to lean to the right, the elements lean to the right. Since the elements move the other way around in relation to the left-and-right direction, the detailed description thereof will be omitted here.

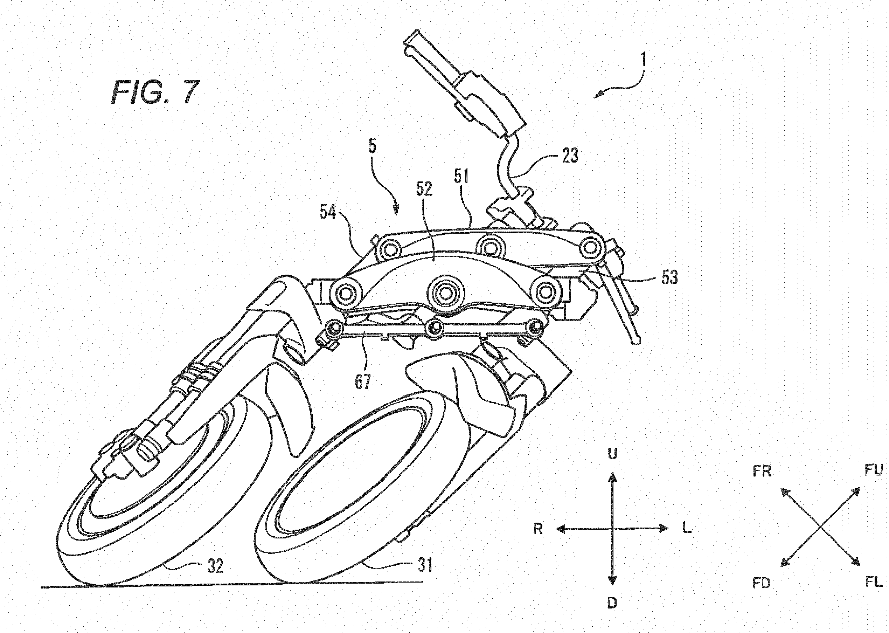

Fig. 7 is a front view of the front part of the vehicle with the vehicle 1 caused to lean and steered. Fig. 7 shows a state in which the vehicle 1 is steered to the left while being caused to lean to the left. The steering operation turns the left front wheel 31 and the right front wheel 32 to the left, and the leaning operation causes the left front wheel 31 and the right front wheel 32 to lean to the left together with the body frame 21. Namely, in this state, the link mechanism 5 exhibits the parallelogram shape, and the tie-rod 67 moves towards the left rear of the body frame 21 from its position that the tie-rod 67 takes when the body frame 21 stays in the upright state.

Thus, has been described heretofore, the vehicle 1 of this embodiment has:
the body frame 21 that can lean to the right of the vehicle 1 when the vehicle 1 turns right and can lean to the left of the vehicle 1 when the vehicle 1 turns left;
the right front wheel 32 that can turn about the right steering axis that extends in the up-and-down direction of the body frame 21;
the left front wheel 31 that is provided on the left of the right front wheel 32 in the left-and-right direction of the body frame 21 and that can turn about the left steering axis that is parallel to the right steering axis;
the right shock absorbing device 34 that supports the right front wheel 32 at the lower portion thereof and that absorbs the displacement of the right front wheel 32 towards the upper portion thereof in the up-and-down direction of the body frame 21;
the left shock absorbing device 33 that supports the left front wheel 31 at the lower portion thereof and that absorbs the displacement of the left front wheel 31 towards the upper portion thereof in the up-and-down direction of the body frame 21; and
the link mechanism 5 that supports the right front wheel 32 and the left front wheel 31 so as to be displaced relative to each other in the up-and-down direction of the body frame 21.

The link mechanism 5 has:
the right side member 54 that supports the upper portion of the right shock absorbing device 34 so as to turn about the right steering axis;
the left side member 53 that supports the upper portion of the left shock absorbing device 33 so as to turn about the left steering axis;
the upper cross member 51 that supports the upper portion of the right side member 54 at the right end portion thereof so as to turn about the right upper axis that extends in the front-and-rear direction of the body frame 21 and supports the upper portion of the left side member 53 at the left end portion thereof so as to turn about the left upper axis that is parallel to the right upper axis and that is supported on the body frame 21 at the middle portion thereof so as to turn about the middle upper axis Mu that is parallel to the right upper axis and the left upper axis; and
the lower cross member 52 that supports the lower portion of the right side member 54 at the right end portion thereof so as to turn about the right lower axis that is parallel to the right upper axis and supports the lower portion of the left side member 53 so as to turn about the left lower axis that is parallel to the left upper axis and that is supported on the body frame 21 at the middle portion thereof so as to turn about the middle lower axis Md that is parallel to the middle upper axis Mu.

### <Details of Body Frame 21>

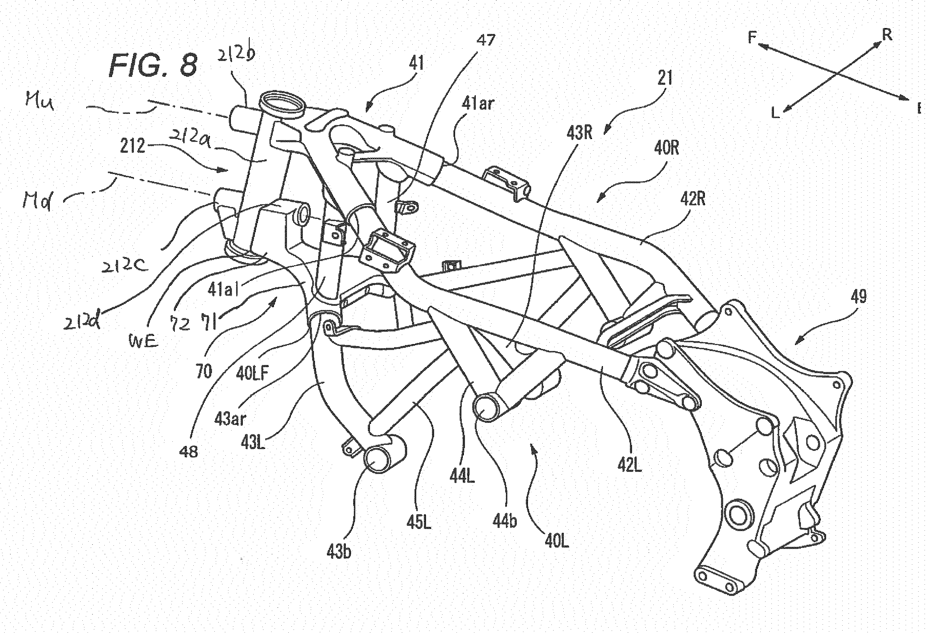

Next, the body frame 21 will be described in detail by using Figs. 8 to 13. Fig. 8 is a perspective view of the body frame 21. As shown in Fig. 8, the body frame 21 has a right frame 40R, a left frame 40L, the link supporting portion 212, an upper bracket 41 and a connecting bracket 70. A front upper portion of the right frame 40R and a front upper portion of the left frame 40L are connected to an upper portion of the link supporting portion 212 via the upper bracket 41. A front lower portion of the right frame 40R and a front lower portion of the left frame 40L are connected to a lower portion of the link supporting portion 212 via the connecting bracket 70.

In this embodiment, the right frame 40R and the left frame 40L are each made up of a plurality of metallic pipes which are connected to one another. The right frame 40R extends in at least the front-and-rear direction of the vehicle 1. The right frame 40R supports right portions of the vehicle mounted parts excluding the body frame 21. The left frame 40L is provided on the left of the right frame 40R on the vehicle 1. The left frame 40L extends in at least the front-and-rear direction of the vehicle 1. The left frame 40L supports left portions of the vehicle mounted parts excluding the body frame 21. In this embodiment, the right frame 40R and the left frame 40L support the engine unit 25 (refer to Fig. 1) and a rear bracket 49 as the vehicle mounted parts.

### <Right Frame 40R and Left Frame 40L>

In this embodiment, the right frame 40R has a configuration that is laterally symmetrical with that of the left frame 40L. Due to this, the left frame 40L will be described by the use of Fig. 8, and a description of the right frame 40R will be omitted here. For reference numerals of respective members of the right frame, R is given in place of L at the end of each of reference numerals given to respective members of the left frame. The left frame 40L has a left upper frame 42L, a left lower frame 43L, a left engine supporting portion 44L and left vertical frames 45L.

The left upper frame 42L and the left lower frame 43L extend in the front-and-rear direction of the vehicle 1. The left upper frame 42L and the left lower frame 43L are formed of pipe members. The left engine supporting portion 44L is provided on the left upper frame 42L at a middle portion thereof in the front-and-rear direction of the vehicle 1.

The left engine supporting portion 44L is formed by welding two pipe members to the left upper frame 42L. A first left fastening hole 44b is provided in the left engine supporting portion 44L, so that a first fastening bolt that is fastened to a left portion of the engine unit 25 is inserted thereinto. A second left fastening hole 43b is provided at a rear end of the left lower frame 43L, so that a second fastening bolt that is fastened to the left portion of the engine unit 25 is inserted thereinto. The left portion of the engine unit 25 is supported on the left frame 40L by the first fastening bolt and the second fastening bolt.

The two left vertical frames 45L connect the left engine supporting portion 44L and the left lower frame 43L together. The left vertical frames 45L are formed of pipe members. The left engine supporting portion 44L and upper portions of the left vertical frames 45L are welded together. The left lower frame 43 and lower portions of the left vertical frames 45L are welded together.

The rear bracket 49 is connected to a rear end of the left upper frame 42L. The left frame 40L supports a left portion of the rear bracket 49. A rear suspension device for hanging the rear wheel 4 is attached to the rear bracket 49.

### <Upper Bracket 41>

The upper bracket 41 connects a front portion of the right upper frame 42R and a front portion of the left upper frame 42L to the link supporting portion 212. The upper bracket 41 is a monolithic metallic member that is formed through casting. The upper bracket 41 is welded to a rear surface of an upper portion of the link supporting portion 212. Two insertion holes are provided in a rear portion of the upper bracket 41 so as to open to the rear. The front portion of the right upper frame 42R and the front portion of the left upper frame 42L are welded to the upper bracket 41 while being inserted into the corresponding insertion holes, respectively.

### <Link Supporting Portion 212>

The link supporting portion 212 is provided ahead of a front end 40RF of the right frame 40R and a front end 40LF of the left frame 40L. In this embodiment, a frontmost portion of a portion that is exposed to an exterior of the right lower frame 43R that is formed of a pipe member is called the front end 40RF of the right frame 40R. A frontmost portion of a portion that is exposed to an exterior of the left lower frame 43R that is formed of a pipe member is called the front end 40LF of the left frame 40L. The link supporting portion 212 is connected to the right upper frame 42R and the left upper frame 42L via the upper bracket 41. The link supporting portion 212 is connected to the right lower frame 43R and the left lower frame 43L via the connecting bracket 70.

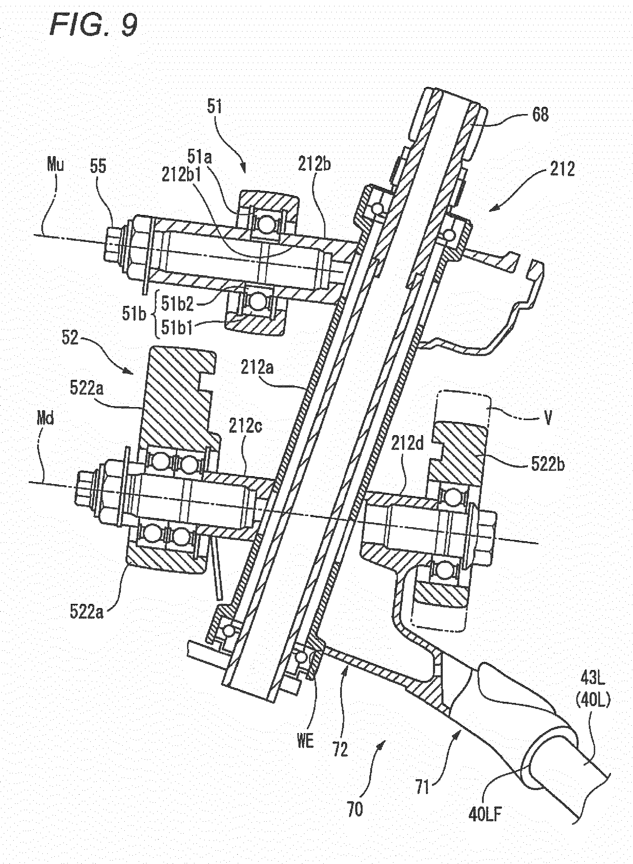

Fig. 9 is a sectional view of the link supporting portion 212. As shown in Fig. 9, the link supporting portion 212 supports the middle portion of the upper cross member 51 and the middle portion of the lower cross member 52 so as to turn. The link supporting portion 212 has a main pipe portion 212a, an upper boss portion 212b, a lower front boss portion 212c and a lower rear boss portion 212d (an example of the turning supporting portion). The downstream side steering shaft 68 is inserted into an interior of a main pipe portion 212a. The upper boss portion 212b is provided at a front portion of an upper portion of the link supporting portion 212. The upper boss portion 212b extends from a front surface of the link supporting portion 212 to the front in the front-and-rear direction of the body frame 21 along the middle upper axis Mu. The upper boss portion 212b is formed of a cylindrical metallic material. The upper boss portion 212b is welded to a front portion of an upper portion of the main pipe portion 212a.

A threaded hole is provided in the upper boss portion 212b, so that a fastening bolt 55 (an example of a shaft portion) that supports the upper cross member 51 so as to turn is inserted thereinto. A through hole 51a is provided in the middle portion of the upper cross member 51. A bearing 51b is provided in this through hole 51a. An outer ring 51b1 of the first bearing 51b is fixed to the upper cross member 51. The fastening bolt 55 is inserted into an inner ring 51b2 of the bearing 51b. The fastening bolt 55 is screwed into a threaded hole 212b1 of the upper boss portion 212b. A ring-shaped front surface of the upper boss portion 212b is in a surface contact with a rear surface of the inner ring 51b2 of the bearing 51b. The inner ring 51b2 of the bearing 51b is pressed against the upper boss portion 212b by tightening the fastening bolt 55 to thereby be fixed to the upper boss portion 212b. The upper cross member 51 turns relative to the upper boss portion 212b as a result of the inner ring 51b2 and the outer ring 51b1 of the bearing 51b turning relative to each other.

The lower front boss portion 212c is provided at a front portion of a lower portion of the link supporting portion 212. The lower front boss portion 212c extends from the front surface of the link supporting portion 212 to the front in the front-and-rear direction of the body frame 21 along the middle lower axis Md. The lower front boss portion 212c is formed of a cylindrical metallic member. The lower front boss portion 212c is welded to a front portion of a lower portion of the main pipe portion 212a. Similar to the upper boss portion 212b, the lower front boss portion 212c supports the front plate member 522a of the lower cross member 52 so as to turn.

The lower rear boss portion 212d is provided at a rear portion of the lower portion of the link supporting portion 212. The lower rear boss portion 212d extends to the rear along the middle lower axis Md in the front-and-rear direction of the body frame 21. Similar to the upper boss portion 212b, the lower rear boss portion 212d supports the rear plate member 522b of the lower cross member 52 so as to turn.

A supporting structure of the lower front boss portion 212c and the lower rear boss portion 212d on the lower cross member 52 is similar to the supporting structure of the upper boss portion 212b on the upper cross member 51, and therefore, a detailed description thereof will be omitted here.

### <Connecting Bracket 70>

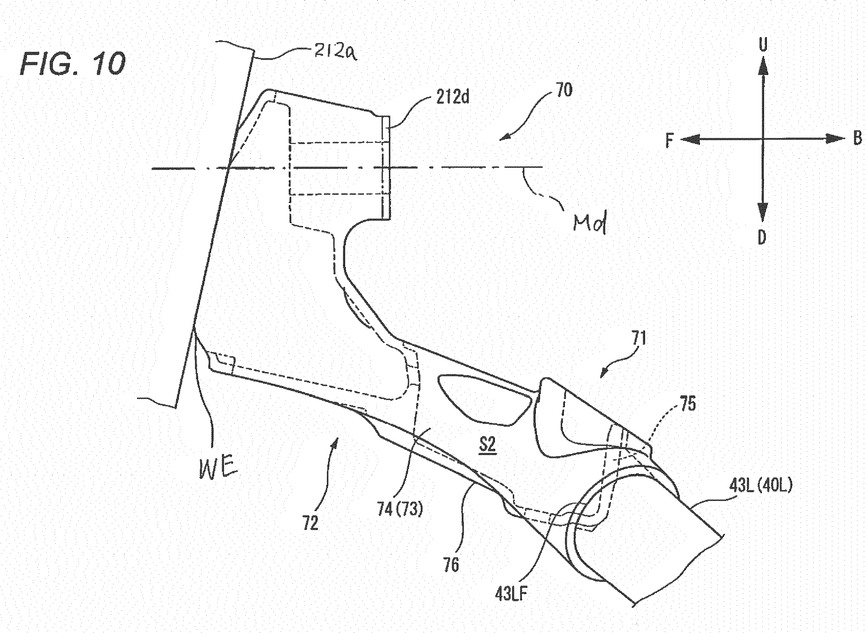

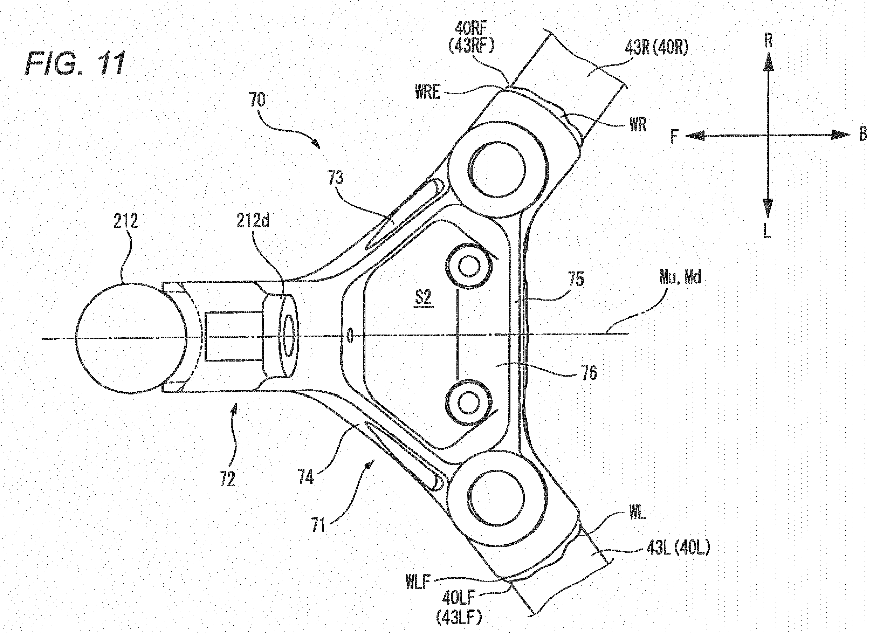

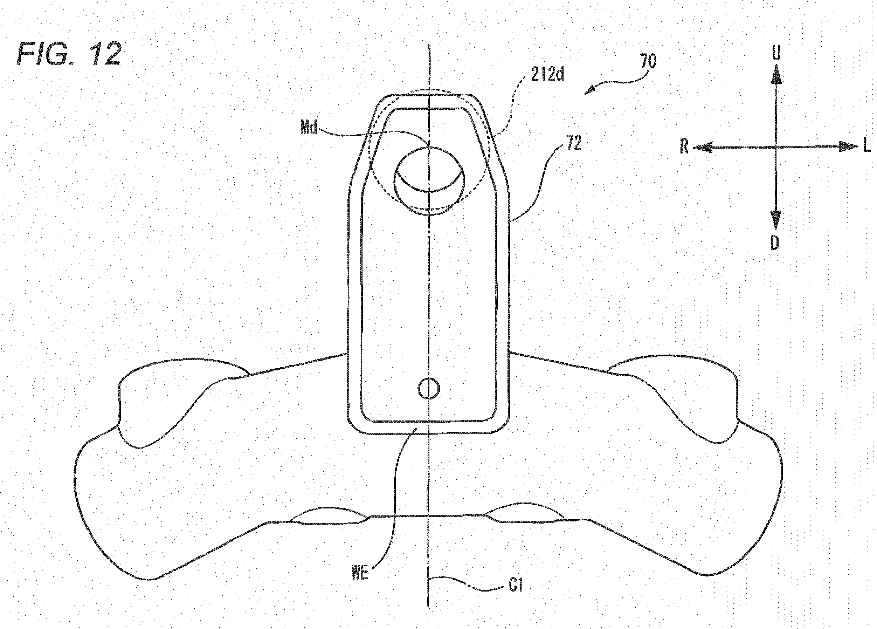

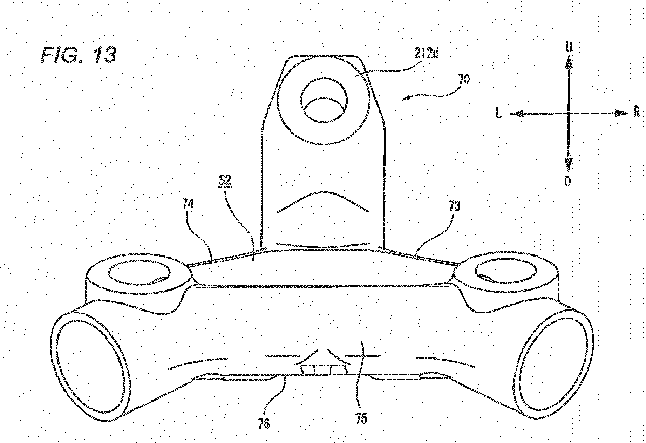

Returning to Fig. 8, the connecting bracket 70 connects the front portion of the right lower frame 43R and the front portion of the left lower frame 43L to the link supporting portion 212. The connecting bracket 70 will be described in detail by using Figs. 10 to 13. Fig. 10 is a side view of the connecting bracket 70. Fig. 11 is a top view of the connecting bracket 70. Fig. 12 is a front view of the connecting bracket 70. Fig. 13 is a rear view of the connecting bracket 70.

As shown in Figs. 10 and 11, the connecting bracket 70 has monolithically a connecting portion 71 and an extending portion 72. The connecting portion 71 constitutes a portion that connects the front end 43RF of the right lower frame 43R and the front end 43LF of the left lower frame 43L together. The extending portion 72 constitutes a portion that extends to the front of the vehicle 1 from the connecting portion 71 to be welded to the link supporting portion 212 at a front end thereof.

As shown in Fig. 12, when the vehicle 1 is seen from the front thereof, a welding portion WE between the extending portion 72 and the link supporting portion 212 is positioned on an imaginary central straight line C1 that passes through the middle upper axis Mu and the middle lower axis Md below the lower rear boss portion 212d in the up-and-down direction of the body frame 21.

Incidentally, as shown in Fig. 9, the lower cross member 52 has the front plate member 522a (a lower front cross element) that is provided ahead of the link supporting portion 212 in relation to the front-and-rear direction of the body frame 21 and the rear plate member 522b (a lower rear cross element) that is provided behind the link supporting portion 212 in relation to the front-and-rear direction of the body frame 21. The rear plate member 522b turns about the middle lower axis Md that extends in the front-and-rear direction of the body frame 21.

According to the vehicle 1 of this embodiment, the welding portion WE between the extending portion 72 and the link supporting portion 212 is positioned on the imaginary central straight line C1 that passes through the middle upper axis Mu and the middle lower axis Md below the lower rear boss portion 212d in the up-and-down direction of the body frame 21. The welding portion WE is positioned near the turning center in relation to the left-and-right direction of the body frame 21, whereby the rear plate member 522b can be disposed close to the lower rear boss portion 212d in relation to the up-and-down direction of the body frame 21 while avoiding an interference of the rear plate member 522b with the extending portion 72. As a result, the link supporting portion 212 can be made compact in dimension in the up-and-down direction of the body frame 21.

In this way, the extending portion 72 and the lower rear boss portion 212d can be disposed close to each other in relation to the up-and-down direction of the body frame 21, whereby the welding portion WE can be provided in the position lying near the lower rear boss portion 212d. The extending portion 72 is connected to the highly rigid right frame 40R and left frame 40L via the connecting portion 71. Due to this, when the lower rear boss portion 212d is monolithic with the connecting bracket 70 as in the illustrated embodiment, a portion of torsional moment inputted into the connecting bracket 70 from the rear plate member 522b can be released to the right frame 40R and the left frame 40L, thereby making it possible to reduce the torsional moment inputted into the link supporting portion 212 via the connecting bracket 70. This can suppress the torsional deformation of the link supporting portion 212.

Further, the welding portion WE can be disposed in the position lying near the lower rear boss portion 212d to which the torsional moment is inputted in relation to the up-and-down direction of the body frame 21. This can also suppress the torsional deformation of the connecting bracket 70. This can reduce the strength itself that is required on the connecting bracket 70.

Frames extending in the up-and-down direction such as the right vertical connecting frame 47 and the left vertical connecting frame 48 that are provided directly behind the link supporting portion 212 are preferable as members for bearing torsional force that is inputted into the link supporting portion. It has been studied in details the mechanism of torsional deformation of the link supporting portion 212 generated when different forces are inputted into the right front wheel and the left front wheel as will be described below and found out that the right vertical connecting frame 47 and the left vertical connecting frame 48 are preferable for suppressing the torsional deformation of the link supporting portion 212.

The following phenomenon is generated sometimes while riding on the vehicle 1 for the reason that the vehicle 1 rides over a step obliquely or the left and right front wheels pass road surfaces having different frictional coefficient µ when the brake is applied. For example, a greater resisting force is exerted on the right front wheel 32 than on the left front wheel 31, a clockwise force is exerted on the lower cross member 52 of the link mechanism 5 when seen from above, while a counterclockwise force is exerted on the upper cross member 51 when seen from above. The link supporting portion 212 supports the upper cross member 51 at the upper portion and supports the lower cross member 52 at the lower portion thereof. Due to this, a clockwise force is exerted on the lower portion of the link supporting portion 212 when seen from above and a counterclockwise force is exerted on the upper portion of the link supporting portion 212 when seen from above. Then, a counterclockwise force acting about an axis of the link supporting portion 212 when seen from above is exerted on the right upper frame 42R of the main frame 40 that is connected to the rear portion of the link supporting portion 212, while a clockwise force acting about the axis of the link supporting portion 212 when seen from above is exerted on the right lower frame 43R. The counterclockwise force acting about the axis of the link supporting portion 212 when seen from above is exerted on the left upper frame 42L, while the clockwise force acting about the axis of the link supporting portion 212 when seen from above is exerted on the left lower frame 43L. As this occurs, the main frame 40 deforms so that points situated away from the link supporting portion 212 move away from each other when seen from above. For example, the rear portion of the right upper frame 42R is displaced rightwards, while the rear portion of the right lower frame 43R is displaced leftwards. Similarly, for example, the rear portion of the left upper frame 42L is displaced rightwards, while the rear portion of the left lower frame 43L is displaced leftwards. When the main frame 40 deforms in this way, a torsional deformation is generated in the link supporting portion 212. The greater the displacement amount of the main frame 40, the greater the torsional deformation amount of the link supporting portion 212. It has been found out that suppressing the displacement amount of the main frame 40 can suppress the torsional displacement amount of the link supporting portion 212.

Then, in this embodiment, the right vertical connecting frame 47 suppresses a relative displacement between the right upper frame 42R and the right lower frame 43r of the main frame 40. The left vertical connecting frame 48 suppresses a relative displacement between the left upper frame 42L and the left lower frame 43L of the main frame 40.

Further, the right vertical connecting frame 47 is connected to the upper bracket 41 and the connecting bracket 70 that connect the front portion of the right upper frame 42R and the front portion of the right lower frame 43R together in a position lying behind the link mechanism 5. Namely, the right vertical connecting frame 47 is provided in the position lying relatively near the link supporting portion 212 behind the link mechanism 5. Similarly, the left vertical connecting frame 48 is connected to the upper bracket 41 and the connecting bracket 70 that connect the front portion of the left upper frame 42L and the front portion of the left lower frame 43L together in a position lying behind the link mechanism 5. Namely, the left vertical connecting frame 48 is provided in the position lying relatively near the link supporting portion 212 behind the link mechanism 5.

The right vertical connecting frame 47 and the left vertical connecting frame 48 that suppress the deformation of the main frame 40 are provided in the positions lying near the link supporting portion 212 that constitute an original point from which the deformation of the main frame 40 is originated. This enables the right vertical connecting frame 47 and the left vertical connecting frame 48 to suppress the torsional deformation of the link supporting portion 212 effectively.

For suppression of the torsional deformation of the link supporting portion 212, the following constructions (1) to (3) may be used alone or in combination in place of the aforesaid right vertical connecting frame 47 and left vertical connecting frame 48. According to the following constructions (1) to (3), the deformation of the main frame 40 described above can be suppressed. (1) A connecting frame provided behind the link mechanism 5 for connecting the right upper frame 42R and the left lower frame 43L together. The deformation of the main frame 40 described above is suppressed by suppressing a relative displacement between the right upper frame 42R and the left lower frame 43L. (2) A connecting frame provided behind the link mechanism 5 for connecting the left upper frame 42L and the right lower frame 43R together. The deformation of the main frame 40 described above is suppressed by suppressing a relative displacement between the left upper frame 42L and the right lower frame 43R. (3) A frame provided behind the link mechanism 5 for connecting the right upper frame 42R and the right lower frame 43R together and the left upper frame 42L and the left lower frame 43L together. The deformation of the main frame 40 described above is suppressed by suppressing a relative displace between the right upper frame 42R and the right lower frame 43R and a relative displacement between the left upper frame 42L and the left lower frame 43L.

In addition, according to the vehicle 1 of this embodiment, as shown in Fig, 9, the middle portion of the lower cross member 52 is attached to the lower rear boss portion 212d so as to turn. The welding portion WE is provided below the lower rear boss portion 212d in the up-and-down direction of the body frame 21.

A greater force is easily exerted on the lower cross member 52 from the front wheel 3 than from the upper cross member 51. Then, in this embodiment, the lower rear boss portion 212d supports the lower cross member 52. The welding portion WE is provided below the lower rear boss portion 212d that supports the lower cross member 52. The welding portion WE can be positioned near the portion on which a great force is exerted, which makes it easy for the right frame 40R and the left frame 40L to bear the torsional moment more effectively to thereby suppress the torsional deformation of the link supporting portion 212. This can also suppress the deformation of the connecting bracket 70 more effectively.

According to the vehicle 1 of this embodiment, as shown in Fig. 11, the front end 40RF of the right frame 40R and the connecting bracket 70 are welded together at a right welding portion WR. The right frame 40R extends to the right and the rear from the right welding portion WR. The front end 40LF of the left frame 40L and the connecting bracket 70 are welded together at a left welding portion WL. The left frame 40L extends to the left and the rear from the left welding portion WL. A front portion of the extending portion 72 is positioned between a right edge WRE of the right welding portion WR where the right frame 40R and the connecting bracket 70 are welded together and a left edge WLE of the left welding portion WL where the left frame 40L and the connecting bracket 70 are welded together in the left-and-right direction of the body frame 21.

The upper cross member 51 turns about the middle upper axis Mu that passes through the middle portion thereof in the left-and-right direction of the body frame 21. The lower cross member 52 turns about the middle lower axis Md that passes through the middle portion thereof in the left-and-right direction of the body frame 21. Due to this, when the extending portion 72 is disposed between the right edge WRE of the right welding portion WR and the left edge WLE of the left welding portion WL in the left-and-right direction of the body frame 21, the extending portion 72 can be disposed close to the upper cross member 51 and the lower cross member 52 in the up-and-down direction while avoiding the interference thereof with the upper cross member 51 and the lower cross member 52. This easily suppress the enlargement in size of the vehicle 1.

According to the vehicle 1 of this embodiment, as shown in Fig. 9, when the vehicle 1 is seen from a side thereof, the front end 40LF of the left frame 40L is positioned behind a rear end of a movable range V of the lower cross member 52 on an extension of the middle lower axis Md. The front end 40RF of the right frame 40R, which is not shown, is also positioned behind the rear end of the movable range V of the lower cross member 52 as with the front end 40LF of the left frame 40L. At least a portion of the extending portion 72 is positioned ahead of the rear end of the movable range V.

Being different from this embodiment, when the right frame and the left frame are welded directly to the link supporting portion 212, the upper cross member 51 or the lower cross member 52 has to be disposed in a position spaced away from the right frame and the left frame in the up-and-down direction so as to avoid an interference of the upper cross member 51 or the lower cross member 52 with the right frame and the left frame.

In the vehicle 1 of this embodiment, however, the front end 40RF of the right frame 40R and the front end 40LF of the left frame 40L are once combined together at the connecting portion 71. The extending portion 72 that extends to the front from the connecting portion 71 is welded to the link supporting portion 212. This makes it difficult for the extending portion 72 to interfere with the upper cross member 51 and the lower cross member 52, whereby the extending portion 72 can be disposed in the position lying close to the upper cross member 51 or the lower cross member 52 in the up-and-down direction of the body frame 21. This can suppress the enlargement in size of the vehicle 1 in the up-and-down direction.

Being different from this embodiment, when the extending portion 72 is connected to the link supporting portion 212 in a position lying closer to the upper cross member 51 than the lower cross member 52, it is preferable that the front end 40LF of the left frame 40L and the front end 40RF of the right frame 40R are positioned behind the rear end of the movable range V of the lower cross member 52 and that at least a portion of the extending portion 72 is positioned ahead of the rear end of the movable range V on an extension of the middle upper axis Mu.

According to the vehicle 1 of this embodiment, as shown in Figs. 10 to 13, the lower rear boss portion 212d is also monolithic with the connecting bracket 70. This can reduce the number of parts. In addition, this enhances the connecting strength between the lower rear boss portion 212d and the connecting bracket 70.

According to the vehicle 1 of this embodiment, as shown in Figs. 10 to 13, the connecting portion 71 has a right wall portion 73 that connects the front portion of the right frame 40R and a rear portion of the extending portion 72 together, a left wall portion 74 that connects the front portion of the left frame 40L and the rear portion of the extending portion 72 together, a rear wall portion 75 that connects the front portion of the right frame 40R and the front portion of the left frame 40L together, and a lower wall portion 76 that connects a lower portion of the right wall portion 73, a lower portion of the left wall portion 74 and a lower portion of the rear wall portion 75 together. A second space S2 that opens upwards is formed by the rear portion of the extending portion 72, the right wall portion 73, the left wall portion 74, the rear wall portion 75, and the lower wall portion 76.

According to the vehicle 1 of this embodiment, forming the second space S2 in an interior of the connecting bracket 70 can reduce the weight thereof more than a case where no such space is formed in the interior thereof. Being different from this embodiment, the second space S2 may open downwards. As this occurs, the connecting portion 71 does not have the lower wall portion 76 but has an upper wall portion that connects an upper portion of the right wall portion 73, an upper portion of the left wall portion 74 and an upper portion of the rear wall portion 75 together. The second space S2 that opens downwards is formed by the rear portion of the extending portion 72, the right wall portion 73, the left wall portion 74, the rear wall portion 75, and the upper wall portion.

According to the vehicle 1 of this embodiment, as shown in Fig. 11, a front portion of the right wall portion 73 is positioned on the left of a rear portion thereof and a front portion of the left wall portion 74 is positioned on the right of a rear portion thereof, when the vehicle 1 is seen from thereabove. According to the vehicle 1 of this embodiment, a lateral dimension of the front portion of the connecting portion 71 is made smaller than a lateral dimension of the rear portion thereof. This enables the front portion of the right wall portion 73 and the front portion of the left wall portion 74 to be disposed close to the upper cross member 51 or the lower cross member 52 in the up-and-down direction while avoiding the interference thereof with the upper cross member 51 or the lower cross member 52, thereby making it easy to suppress the enlargement in size of the vehicle 1 in the up-and-down direction.

According to the vehicle 1 of this embodiment, as shown in Fig. 8, the right frame 40R has the right upper frame 42R that extends in at least the front-and-rear direction of the vehicle 1 and the right lower frame 43R that is provided below the right upper frame 42R and that extends in at least the front-and-rear direction of the vehicle 1. The left frame 40L has the left upper frame 42L that extends in at least the front-and-rear direction of the vehicle 1 and the left lower frame 43L that is provided below the left upper frame 42L and that extends in at least the front-and-rear direction of the vehicle 1. The front portion of the right upper frame 42R and the front portion of the left upper frame 42L are connected to the upper portion of the link supporting portion 212 by way of the upper bracket 41.

The upper bracket 41 has the right upper insertion hole 41ar into which the front portion of the right upper frame 42R is inserted and the left upper insertion hole 41al into which the front portion of the left upper frame 42L is inserted. The connecting bracket 70 has a right lower insertion hole 43ar into which the front portion of the right lower frame 43R is inserted and a left lower insertion hole (not shown) into which the front portion of the left lower frame 43L is inserted. The upper bracket 41 and the connecting bracket 70 are connected together by a right vertical frame 45R that extends in the up-and-down direction of the body frame 21 and a left vertical frame 45L that extends in the up-and-down direction of the body frame 21 and that is provided on the left of the right vertical frame 45R.

According to the vehicle 1 of this embodiment, the connecting strength of the upper bracket 41 and the connecting bracket 70 is enhanced by the right vertical frame 45R and the left vertical frame 45L, thereby making it easy to fix relative positions thereof to the right upper insertion hole 41ar, the left upper insertion hole 41al, the right lower insertion hole 43ar and the left lower insertion hole. In fabricating the body frame 21, the right upper frame 42R, the left upper frame 42L, the right lower frame 43R and the left lower frame 43L are temporarily assembled together in advance to fabricate a first assembly. In addition, the upper bracket 41, the link supporting portion 212 and the connecting bracket 70 are temporarily assembled together in advance to fabricate a second assembly. According to the vehicle 1 of this embodiment, in assembling the first assembly to the second assembly, the working efficiency is enhanced in inserting the respective front portions of the frames into the corresponding insertion holes.

According to the vehicle 1 of this embodiment, as shown in Fig. 11, the right end of the extending portion 72 is positioned on the left of the right end of the link supporting portion 212, and the left end of the extending portion 72 is positioned on the right of the left end of the link supporting portion 212 in relation to the left-and-right direction of the vehicle 1. In this way, the extending portion 72 is thinner than the link supporting portion 212 in relation to the left-and-right direction of the body frame 21, and therefore, it becomes easier to avoid the interference of the extending portion 72 with the upper cross member 51 and the lower cross member 52.

In the embodiment described above, the right frame 40R and the left frame 40L are described as supporting the engine unit 25 and the rear bracket 49 as vehicle mounted parts. Alternatively, the right frame 40R and the left frame 40L may be configured so as to support a pivot arm link device of a swing unit for the rear wheel, a fuel tank, a suspension device for supporting the rear wheel and the like as vehicle mounted parts.

In the embodiment described above, the upper cross member 51 has the upper front cross element that is disposed ahead of the link supporting portion 212 but does not have a cross element that is disposed behind the link supporting portion 212. The lower cross member 52 has the lower front cross element that is disposed ahead of the link supporting portion 212 and the lower rear cross element that is disposed behind the link supporting portion 212. Alternatively, the upper cross member 51 may have the upper front cross element disposed ahead of the link supporting portion 212 and a cross element disposed behind the link supporting portion 212, and the lower cross member 52 may have the lower front cross element disposed ahead of the link supporting portion 212 and the lower rear cross element disposed behind the link supporting portion 212. Alternatively, the upper cross member 51 may have a single cross element disposed ahead of or behind the link supporting portion 212, and the lower cross member 52 may have a single cross element disposed ahead of or behind the link supporting portion 212. In any cases, the welding portion WE between the extending portion 72 and the link support portion 212 is preferably provided below the lower rear cross element.

In the embodiment described above, the left shock absorbing device 33 and the right shock absorbing device 34 each include the pair of telescopic mechanisms. However, depending upon the specification of the vehicle 1, the number of telescopic mechanisms that the left shock absorbing device 33 and the right shock absorbing device 34 include individually may be one.

In the embodiment described above, in the left shock absorbing device 33, the left outer tube is described as being situated above the left inner tube and the left front wheel 31 is described as being supported rotatably at the lower portion of the left inner tube, and in the right shock absorbing device 34, the right outer tube is described as being situated above the right inner tube and the right front wheel 32 is described as being supported rotatably at the lower portion of the right inner tube. Alternatively, in the left shock absorbing device, the left inner tube may be situated above the left outer tube and the left front wheel may be supported rotatably at the lower portion of the left outer tube, and in the right shock absorbing device, the right inner tube may be situated above the right outer tube and the right front wheel may be supported rotatably at the lower portion of the right outer tube.

In the embodiment described above, while the left shock absorbing device 33 is described as being positioned on the left side of the left front wheel 31, and the right shock absorbing device 34 is described as being positioned on the right side of the right front wheel 32, in an alternative embodiment, the left shock absorbing device 33 may be situated on the right of the left front wheel 31, and the right shock absorbing device 34 may be situated on the left of the right front wheel 32.

In the embodiment described above, while the engine unit 25 is described as supporting the rear wheel 4 so as to oscillate, in an alternative embodiment, the engine unit and the rear wheel may be both supported on the body frame so as to oscillate.

In the embodiment described above, the vehicle 1 includes the single rear wheel 4. However, the number of rear wheels may be plural.

In the embodiment described above, the center of the rear wheel 4 in relation to the left-and-right direction of the body frame 21 coincides with the center of the distance defined between the left front wheel 31 and the right front wheel 32 in relation to the left-and-right direction of the body frame 21. Although the configuration described above is preferable, the center of the rear wheel 4 in relation to the left-and-right direction of the body frame 21 may not coincide with the center of the distance defined between the left front wheel 31 and the right front wheel 32 in relation to the left-and-right direction of the body frame 21.

In the embodiment described above, the link mechanism 5 includes the upper cross member 51 and the lower cross member 52. However, the link mechanism 5 may include a cross member other than the upper cross member 51 and the lower cross member 52. The "upper cross member" and the "lower cross member" are merely so called based on their relative positional relationship in the up-and-down direction. The upper cross member is not intended to imply an uppermost cross member in the link mechanism 5. The upper cross member means a cross member that lies above a cross member that lies therebelow. The lower cross member is not intended to imply a lowermost cross member in the link mechanism 5. The lower cross member means a cross member that lies below another cross member that lies thereabove. At least one of the upper cross member 51 and the lower cross member 52 may be made up of two members of a right cross member and a left cross member. In this way, the upper cross member 51 and the lower cross member 52 may be made up of a plurality of cross members as long as they maintain the link function.

In the embodiment described heretofore, the link mechanism 5 makes up the parallel four joint link system. However, the link mechanism 5 may adopt a configuration using a double wishbone link system.

When used in this specification the terms "preferable or preferably" and "may", same should be construed as being non-exclusive, and hence, those terms mean, respectively, that it is "preferable but not limited thereto" and that it "may be acceptable but not limited thereto."

### [Description of Reference Numerals and Characters]

- 1: Vehicle
- 2: Vehicle main body portion
- 3: Front wheel
- 4: Rear wheel
- 5: Link mechanism
- 6: Steering force transmission mechanism
- 21: Body frame
- 22: Body cover
- 23: Handlebar
- 24: Seat
- 25: Engine unit
- 31: Left front wheel
- 32: Right front wheel
- 33: Left shock absorbing device (mechanism)
- 34: Right shock absorbing device (mechanism)
- 40L: Left frame
- 40LF: Front end of left frame
- 40R: Right frame
- 40RF: Front end of right frame
- 41: Upper bracket
- 41 al: Left upper insertion hole
- 41 ar: Right upper insertion hole
- 42L: Left upper frame
- 42R: Right upper frame
- 43L: Left lower frame
- 43LF: Front end of left lower frame
- 43R: Right lower frame
- 43RF: Front end of right lower frame
- 43ar: Right lower insertion hole
- 43b: Second left fastening hole
- 44b: First left fastening hole
- 44L: Left engine supporting portion
- 45L: Left vertical frame
- 45R: Right vertical frame
- 49: Rear bracket
- 51: Upper cross member
- 51a: Through hole
- 51b: Bearing
- 51b1: Outer ring
- 51b2: Inner ring
- 52: Lower cross member
- 53: Left side member
- 54: Right side member
- 55: Fastening bolt
- 60: Upstream side steering shaft
- 61: Middle transmission plate
- 62: Left transmission plate
- 63: Right transmission plate
- 64: Middle joint
- 65: Left joint
- 66: Right joint
- 67: Tie-rod
- 68: Downstream side steering shaft
- 70: Connecting bracket
- 71: Connecting portion
- 72: Extending portion
- 73: Right wall portion
- 74: Left wall portion
- 75: Rear wall portion
- 76: Lower wall portion
- 80: Connecting member
- 211: headpipe
- 212: Link supporting portion
- 212a: Main pipe portion
- 212b: Upper boss portion
- 212b1: Hole
- 212c: Lower front boss portion
- 212d: Lower rear boss portion (turning supporting portion)
- 221: Front cover
- 223: Front fender
- 224: Rear fender
- 311: left axle member
- 317: Left bracket
- 321: Right axle member
- 327: Right bracket
- 331: Left front telescopic element
- 332: Left rear telescopic element
- 333: Left front outer tube
- 334: left front inner tube
- 335: Left rear outer tube
- 336: left rear inner tube
- 337: Left inner connecting element
- 341: Right front telescopic element
- 342: Right rear telescopic element
- 343: Right front outer tube
- 344: Right front inner tube
- 345: Right rear outer tube
- 346: Right rear inner tube
- 347: Right inner connecting element
- 512: Plate member
- 522a: Front plate member
- 522b: Rear plate member
- 523a: Left connecting block
- 523b: Right connecting block
- a: Rear steering axis
- b: Front steering axis
- X: Left steering axis
- Y: Right steering axis
- Z: Middle steering axis
- c: Left extension and contraction axis
- d: Right extension and contraction axis
- Md: Middle lower axis
- Mu: Middle upper axis
- C1: Central straight line
- S2: Second space
- V: movable range
- WE: Welding portion
- WL: Left welding portion
- WLE: Left edge of left welding portion
- WR: Right welding portion
- WRE: Right edge of right welding portion

## Claims

1. A vehicle having:
a body frame (21) configured to lean to the right of the vehicle when the vehicle turns to the right and lean to the left of the vehicle when the vehicle turns to the left;
a right front wheel (32) configured to turn about a right steering axis (Y) that extends in an up-and-down direction of the body frame (21);
a left front wheel (31) provided on the left of the right front wheel (32) in a left-and-right direction of the body frame (21) and configured to turn about a left steering axis (X) that is parallel to the right steering axis (Y);
a right shock absorbing mechanism (34) supporting the right front wheel (32) at a lower portion and configured to absorb a displacement of the right front wheel (32) towards an upper portion thereof in the up-and-down direction of the body frame (21);
a left shock absorbing mechanism (33) supporting the left front wheel (31) at a lower portion and configured to absorb a displacement of the left front wheel (31) towards an upper portion thereof in the up-and-down direction of the body frame (21); and
a link mechanism (5) supporting the right front wheel (32) and the left front wheel (31) so as to be displaced relative to each other in the up-and-down direction of the body frame (21),
wherein the link mechanism (5) has:
a right side member (54) supporting an upper portion of the right shock absorbing mechanism (34) so as to turn about the right steering axis (Y);
a left side member (53) supporting an upper portion of the left shock absorbing mechanism (33) so as to turn about the left steering axis (X);
an upper cross member (51) supporting an upper portion of the right side member (54) at a right end portion thereof so as to turn about a right upper axis that extends in a front-and-rear direction of the body frame (21) and an upper portion of the left side member (53) at a left end portion thereof so as to turn about a left upper axis that is parallel to the right upper axis and supported on the body frame (21) at a middle portion thereof so as to turn about a middle upper axis (Mu) that is parallel to the right upper axis and the left upper axis; and
a lower cross member (52) supporting a lower portion of the right side member (54) at a right end portion thereof so as to turn about a right lower axis that is parallel to the right upper axis and a lower portion of the left side member (53) at a left end portion thereof so as to turn about a left lower axis that is parallel to the left upper axis and supported on the body frame (21) at a middle portion thereof so as to turn about a middle lower axis (Md) that is parallel to the middle upper axis (Mu),
wherein the body frame (21) has:
a right frame (40R) that extends in at least a front-and-rear direction of the vehicle to support a right portion of a vehicle mounted part other than the body frame (21);
a left frame (40L) that extends in at least the front-and rear direction of the vehicle to support left portion of the vehicle mounted part other than the body frame (21); and
a link supporting portion (212) that is provided ahead of a front end (40RF) of the right frame (40R) and a front end (40LF) of the left frame (40L) to support the middle portion of the upper cross member (51) and the middle portion of the lower cross member (52) so as to turn,
wherein a turning supporting portion (212d) to which the middle portion of at least one of the upper cross member (51) and the lower cross member (52) is attached is provided at a rear portion of the link supporting portion (212),
wherein the body frame (21) has a connecting portion (71) connecting the front end (40RF) of the right frame (40R) and the front end (40LF) of the left frame (40L) together, **characterized by**
a connecting bracket (70) being monolithically with the turning supporting portion (212d) and having monolithically an extending portion (72) that extends to the front of the vehicle from the connecting portion (71) and that is welded to the link supporting portion (212) at a front end thereof, and
wherein when the vehicle is seen from the front thereof, a welding portion (WE) between the extending portion (72) and the link supporting portion (212) is positioned on an imaginary central straight line (C1) that passes through the middle upper axis (Mu) and the middle lower axis (Md) above or below the turning supporting portion (212d) in the up-and-down direction of the body frame (21).

2. The vehicle according to claim 1, **characterized in that** the middle portion of the lower cross member (52) is attached to the turning supporting portion (212d) so as to turn, and
wherein the welding portion (WE) is provided below the turning supporting portion (212d) in the up-and-down direction of the body frame (21).

3. The vehicle according to claim 1, **characterized in that** a front portion of the extending portion (72) is positioned between a right edge (WRE) of a right welding portion (WE) where the right frame (40R) and the connecting bracket (70) are welded together and a left edge (WLE) of a left welding portion (WE) where the left frame (40L) and the connecting bracket (70) are welded together in a left-and right direction of the body frame (21).

4. The vehicle according to any one of claims 1 to 3, **characterized in that** when the vehicle is seen from a side thereof, the front end (40RF) of the right frame (40R) and the front end (40LF) of the left frame (40L) are positioned behind a rear end of a movable range of the upper cross member (51) or a rear end of a movable range (V) of the lower cross member (52) on an extension of the middle upper axis (Mu) or the middle lower axis (Md), and at least a portion of the extending portion (72) is positioned ahead of the rear end of the movable range (V).

5. The vehicle according to any one of claims 1 to 4, **characterized in that** the connecting portion (71) has:
a right wall portion (73) connecting a front portion of the right frame (40R) and a rear portion of the extending portion (72) together;
a left wall portion (74) connecting a front portion of the left frame (40L) and the rear portion of the extending portion (72) together;
a rear wall portion (75) connecting the front portion of the right frame (40R) and the front portion of the left frame (40L) together; and
a lower wall portion (76) connecting a lower portion of the right wall portion (73), a lower portion of the left wall portion (74) and a lower portion of the rear wall portion (75) together or an upper wall portion connecting an upper portion of the right wall portion (73), an upper portion of the left wall portion (74) and an upper portion of the rear wall portion (75) together, and
wherein a second space (S2) that opens upwards or downwards is formed by a rear portion of the extending portion (72), the right wall portion (73), the left wall portion (74), the rear wall portion (75), the lower wall portion (76) or the upper wall portion.

6. The vehicle according to claim 5, **characterized in that** a front portion of the right wall portion (73) is positioned on the left of a rear portion thereof, and a front portion of the left wall portion (74) is positioned on the right of a rear portion thereof when the vehicle is seen from thereabove.

7. The vehicle according to any one of claims 1 to 6, **characterized in that** the right frame (40R) has:
a right upper frame (42R) extending in at least the front-and-rear direction of the vehicle; and
a right lower frame (43R) provided below the right upper frame (42R) and extending in the front-and-rear direction of the vehicle,
wherein the left frame (40L) has:
a left upper frame (42L) extending in at least the front-and-rear direction of the vehicle; and
a left lower frame (43L) provided below the left upper frame (42L) and extending in the front-and-rear direction of the vehicle,
wherein a front portion of the right upper frame (42R) and a front portion of the left upper frame (42L) are connected to an upper portion of the link supporting portion (212) via an upper bracket (41),
wherein the upper bracket (41) has a right upper insertion hole (41ar) into which the front portion of the right upper frame (42R) is inserted and a left upper insertion hole (41al) into which a front portion of the left upper frame (42L) is inserted,
wherein the connecting bracket (70) has a right lower insertion hole (43ar) into which a front portion of the right lower frame (43R) is inserted and a left lower insertion hole into which a front portion of the left lower frame (43L) is inserted, and
wherein the upper bracket (41) and the connecting bracket (70) are connected together by a right vertical frame (45R) extending in the up-and-down direction of the body frame (21) and a left vertical frame (45L) extending in the up-and-down direction of the body frame (21) and provided on the left of the right vertical frame (45R).

8. The vehicle according to any one of claims 1 to 7, **characterized in that** in relation to a left-and-right direction of the vehicle, a right end of the extending portion (72) is positioned on the left of a right end of the link supporting portion (212), and a left end of the extending portion (72) is positioned on the right of a left end of the link supporting portion (212).

## Patentansprüche

1. Ein Fahrzeug mit:
einem Körper-Rahmen (21), der konfiguriert ist, um sich nach rechts von dem Fahrzeug zu neigen, wenn das Fahrzeug nach rechts abbiegt, und sich nach links von dem Fahrzeug zu neigen, wenn das Fahrzeug nach links abbiegt;
ein rechtes Vorder-Rad (32), das konfiguriert ist, um sich um eine rechte Lenk-Achse (Y) zu drehen, die sich in einer Auf-und-Ab-Richtung des Körper-Rahmens (21) erstreckt;
ein linkes Vorder-Rad (31), das links von dem rechten Vorder-Rad (32) in einer Links-Rechts-Richtung des Körper-Rahmens (21) vorgesehen und konfiguriert ist, um sich um eine linke Lenk-Achse (X), die parallel zu der rechten Lenk-Achse (Y) ist, zu drehen;
einen rechten Stoß-Dämpfungs-Mechanismus (34), der das rechte Vorder-Rad (32) an einem unteren Abschnitt lagert und konfiguriert ist, um eine Verschiebung des rechten Vorder-Rads (32) zu einem oberen Abschnitt desselben in der Auf-und-Ab-Richtung des Körper-Rahmens (21) zu absorbieren;
einen linken Stoß-Dämpfungs-Mechanismus (33), der das linke Vorder-Rad (31) an einem unteren Abschnitt lagert und konfiguriert ist, um eine Verschiebung des linken Vorder-Rads (31) zu einem oberen Abschnitt desselben in der Auf-und-Ab-Richtung des Körper-Rahmens (21) zu absorbieren; und
einen Lenker-Mechanismus (5), der das rechte Vorder-Rad (32) und das linke Vorder-Rad (31) lagert, so dass sie relativ zueinander in der Auf-und-Ab-Richtung des Körper-Rahmens (21) verschiebbar sind,
wobei der Lenker-Mechanismus (5) aufweist:
ein Rechts-Seiten-Element (54), das einen oberen Abschnitt des rechten Stoß-Dämpfungs-Mechanismus (34) lagert, so dass er sich um die rechte Lenk-Achse (Y) dreht;
ein Links-Seiten-Element (53), das einen oberen Abschnitt des linken Stoß-Dämpfungs-Mechanismus (33) lagert, so dass er sich um die linke Lenk-Achse (X) dreht;
ein oberes Quer-Element (51), das einen oberen Abschnitt des Rechts-Seiten-Elements (54) an einem rechten End-Abschnitt desselben lagert, um sich um eine rechte obere Achse zu drehen, die sich in einer Vorwärts-und-Rückwärts-Richtung des Körper-Rahmens (21) erstreckt, und einen oberen Abschnitt des Links-Seiten-Elements (53) an einem linken End-Abschnitt desselben lagert, um sich um eine linke obere Achse zu drehen, die parallel zu der rechten oberen Achse ist, und an dem Körper-Rahmen (21) an einem mittleren Abschnitt desselben gelagert ist, um sich um eine mittlere obere Achse (Mu) zu drehen, die parallel zu der rechten oberen Achse und der linken oberen Achse ist; und
ein unteres Quer-Element (52), das einen unteren Abschnitt des Rechts-Seiten-Elements (54) an einem rechten End-Abschnitt desselben lagert, um sich um eine rechte untere Achse zu drehen, die parallel zur rechten oberen Achse ist, und einen unteren Abschnitt des Links-Seiten-Elements (53) an einem linken End-Abschnitt desselben lagert, um sich um eine linke untere Achse zu drehen, die parallel zur linken oberen Achse ist, und an dem Körper-Rahmen (21) an einem mittleren Abschnitt desselben gelagert ist, um sich um eine mittlere untere Achse (Md) zu drehen, die parallel zur mittleren oberen Achse (Mu) ist,
wobei der Körper-Rahmen (21) aufweist:
einen rechten Rahmen (40R), der sich zumindest in einer Vorwärts-und-Rückwärts-Richtung des Fahrzeugs erstreckt, um einen rechten Abschnitt eines Fahrzeug-Anbau-Teils, anders als den Körper-Rahmen (21), zu lagern;
einen linken Rahmen (40L), der sich zumindest in der Vorwärts-und-Rückwärts-Richtung des Fahrzeugs erstreckt, um den linken Abschnitt des Fahrzeug-AnbauTeils, anders als den Körper-Rahmen (21), zu lagern; und
einen Lenker-Lagerungs-Abschnitt (212), der vor einem vorderen Ende (40RF) des rechten Rahmens (40R) und einem vorderen Ende (40LF) des linken Rahmens (40L) vorgesehen ist, um den mittleren Abschnitt des oberen Quer-Elements (51) und den mittleren Abschnitt des unteren Quer-Elements (52) zu lagern, um sich zu drehen,
wobei ein Dreh-Lagerungs-Abschnitt (212d) vorgesehen ist, an dem der mittlere Abschnitt des oberen Quer-Elements (51) und/oder des unteren Quer-Elements (52) angebracht ist, an einem hinteren Abschnitt des Lenker-Lagerungs-Abschnitts (212) vorgesehen ist,
wobei der Körper-Rahmen (21) einen Verbindungs-Abschnitt (71) hat, der das vordere Ende (40RF) des rechten Rahmens (40R) und das vordere Ende (40LF) des linken Rahmens (40L) miteinander verbindet, **gekennzeichnet durch**
eine Verbindungs-Klammer (70), die monolithisch mit dem Dreh-Lagerungs-Abschnitt (212d) ist und monolithisch einen Erstreckungs-Abschnitt (72) hat, der sich von dem Verbindungs-Abschnitt (71) zur Vorder-Seite des Fahrzeugs erstreckt und der mit dem Lenker-Lagerungs-Abschnitt (212) an einem vorderen Ende davon verschweißt ist, und
wobei, wenn das Fahrzeug von seiner Vorder-Seite aus gesehen wird, ein Schweiß-Abschnitt (WE) zwischen dem Erstreckungs-Abschnitt (72) und dem Lenker-Lagerungs-Abschnitt (212) auf einer imaginären zentralen geraden Linie (C1) positioniert ist, die durch die mittlere obere Achse (Mu) und die mittlere untere Achse (Md) oberhalb oder unterhalb des Dreh-Lagerungs-Abschnitts (212d) in der Auf-und-Ab-Richtung des Körper-Rahmens (21) verläuft.

2. Das Fahrzeug gemäß Anspruch 1, **dadurch gekennzeichnet, dass** der mittlere Abschnitt des unteren Quer-Elements (52) drehbar an dem Dreh-Lagerungs-Abschnitt (212d) angebracht ist, und
wobei der Schweiß-Abschnitt (WE) unterhalb des Dreh-Lagerungs-Abschnitts (212d), in Auf-und-Ab-Richtung des Körper-Rahmens (21), vorgesehen ist.

3. Das Fahrzeug gemäß Anspruch 1, **dadurch gekennzeichnet, dass** ein vorderer Abschnitt des Erstreckungs-Abschnitts (72) zwischen einer rechten Kante (WRE) eines rechten Schweiß-Abschnitts (WE), an dem der rechte Rahmen (40R) und die Verbindungs-Klammer (70) zusammengeschweißt sind, und einer linken Kante (WLE) eines linken Schweiß-Abschnitts (WE), an dem der linke Rahmen (40L) und die Verbindungs-Klammer (70) zusammengeschweißt sind, in einer Links-Rechts-Richtung des Körper-Rahmens (21) angeordnet ist.

4. Das Fahrzeug gemäß einem der Ansprüche 1 bis 3, **dadurch gekennzeichnet, dass**, bei Betrachtung des Fahrzeugs von einer Seite desselben, das vordere Ende (40RF) des rechten Rahmens (40R) und das vordere Ende (40LF) des linken Rahmens (40L) hinter einem hinteren Ende eines Bewegungs-Bereichs des oberen Quer-Elements (51) oder einem hinteren Ende eines Bewegungs-Bereichs (V) des unteren Quer-Elements (52) auf einer Verlängerung der mittleren oberen Achse (Mu) oder der mittleren unteren Achse (Md) positioniert sind und zumindest ein Teil des Erstreckungs-Abschnitts (72) vor dem hinteren Ende des Bewegungs-Bereichs (V) positioniert ist.

5. Das Fahrzeug gemäß einem der Ansprüche 1 bis 4, **dadurch gekennzeichnet, dass** der Verbindungs-Abschnitt (71) aufweist:
einen rechten Wand-Abschnitt (73), der einen vorderen Abschnitt des rechten Rahmens (40R) und einen hinteren Abschnitt des Erstreckungs-Abschnitts (72) miteinander verbindet;
einen linken Wand-Abschnitt (74), der einen vorderen Abschnitt des linken Rahmens (40L) und den hinteren Abschnitt des Erstreckungs-Abschnitts (72) miteinander verbindet;
einen hinteren Wand-Abschnitt (75), der den vorderen Abschnitt des rechten Rahmens (40R) und den vorderen Abschnitt des linken Rahmens (40L) miteinander verbindet; und
einen unteren Wand-Abschnitt (76), der einen unteren Abschnitt des rechten Wand-Abschnitts (73), einen unteren Abschnitt des linken Wand-Abschnitts (74) und einen unteren Abschnitt des hinteren Wand-Abschnitts (75) miteinander verbindet, oder
einen oberen Wand-Abschnitt, der einen oberen Abschnitt des rechten Wand-Abschnitts (73), einen oberen Abschnitt des linken Wand-Abschnitts (74) und einen oberen Abschnitt des hinteren Wand-Abschnitts (75) miteinander verbindet, und
wobei ein zweiter Raum (S2), der sich nach oben oder unten öffnet, durch einen hinteren Abschnitt des Erstreckungs-Abschnitts (72), den rechten Wand-Abschnitt (73), den linken Wand-Abschnitt (74), den hinteren Wand-Abschnitt (75), den unteren Wand-Abschnitt (76) oder den oberen Wand-Abschnitt gebildet ist.

6. Das Fahrzeug gemäß Anspruch 5, **dadurch gekennzeichnet, dass** ein vorderer Abschnitt des rechten Wand-Abschnitts (73) links von einem hinteren Abschnitt desselben angeordnet ist und ein vorderer Abschnitt des linken Wand-Abschnitts (74) rechts von einem hinteren Abschnitt desselben angeordnet ist, wenn das Fahrzeug von oben gesehen wird.

7. Das Fahrzeug gemäß einem der Ansprüche 1 bis 6, **dadurch gekennzeichnet, dass** der rechte Rahmen (40R) aufweist:
einem rechten oberen Rahmen (42R), der sich zumindest in der Vorwärts-und-Rückwärts-Richtung des Fahrzeugs erstreckt; und
einem rechten unteren Rahmen (43R), der unterhalb des rechten oberen Rahmens (42R) vorgesehen ist und sich in der Vorwärts-und-Rückwärts-Richtung des Fahrzeugs erstreckt,
wobei der linke Rahmen (40L) aufweist:
einem linken oberen Rahmen (42L), der sich zumindest in der Vorwärts-und-Rückwärts-Richtung des Fahrzeugs erstreckt; und
einem linken unteren Rahmen (43L), der unterhalb des linken oberen Rahmens (42L) vorgesehen ist und sich in der Vorwärts-und-Rückwärts-Richtung des Fahrzeugs erstreckt,
wobei ein vorderer Abschnitt des rechten oberen Rahmens (42R) und ein vorderer Abschnitt des linken oberen Rahmens (42L) mit einem oberen Abschnitt des Lenker-Lagerungs-Abschnitts (212) über eine obere Klammer (41) verbunden sind,
wobei die obere Klammer (41) ein rechtes oberes Einsetz-Loch (41ar), in das der vordere Abschnitt des rechten oberen Rahmens (42R) eingesetzt ist, und ein linkes oberes Einsetz-Loch (41al), in das ein vorderer Abschnitt des linken oberen Rahmens (42L) eingesetzt ist, aufweist,
wobei die Verbindungs-Klammer (70) ein rechtes unteres Einsetz-Loch (43ar), in das ein vorderer Abschnitt des rechten unteren Rahmens (43R) eingesetzt ist, und ein linkes unteres Einsetz-Loch, in das ein vorderer Abschnitt des linken unteren Rahmens (43L) eingesetzt ist, aufweist, und
wobei die obere Klammer (41) und die Verbindungs-Klammer (70) durch einen rechten vertikalen Rahmen (45R), der sich in der Auf-und-Ab-Richtung des Körper-Rahmens (21) erstreckt, und einen linken vertikalen Rahmen (45L), der sich in der Auf-und-Ab-Richtung des Körper-Rahmens (21) erstreckt und links von dem rechten vertikalen Rahmen (45R) vorgesehen ist, miteinander verbunden sind.

8. Das Fahrzeug gemäß einem der Ansprüche 1 bis 7, **dadurch gekennzeichnet, dass** in Bezug auf eine Links-Rechts-Richtung des Fahrzeugs ein rechtes Ende des Erstreckungs-Abschnitts (72) links von einem rechten Ende des Lenker-Lagerungs-Abschnitts (212) positioniert ist, und ein linkes Ende des Erstreckungs-Abschnitts (72) rechts von einem linken Ende des Lenker-Lagerungs-Abschnitts (212) positioniert ist.

## Revendications

1. Véhicule ayant :
un châssis de carrosserie (21) configuré pour se pencher vers la droite du véhicule lorsque le véhicule tourne vers la droite et se pencher vers la gauche du véhicule lorsque le véhicule tourne vers la gauche ;
une roue avant droite (32) configurée pour tourner autour d'un axe de direction droit (Y) qui s'étend dans une direction vers le haut et le bas du châssis de carrosserie (21) ;
une roue avant gauche (31) agencée sur la gauche de la roue avant droite (32) dans une direction gauche et droite du châssis de carrosserie (21) et configurée pour tourner autour d'un axe de direction gauche (X) qui est parallèle à l'axe de direction droit (Y) ;
un mécanisme amortisseur droit (34) supportant la roue avant droite (32) au niveau d'une partie inférieure et configuré pour absorber un déplacement de la roue avant droite (32) vers une partie supérieure de celui-ci dans la direction vers le haut et le bas du châssis de carrosserie (21) ;
un mécanisme amortisseur gauche (33) supportant la roue avant gauche (31) au niveau d'une partie inférieure et configuré pour absorber un déplacement de la roue avant gauche (31) vers une partie supérieure de celui-ci dans la direction vers le haut et le bas du châssis de carrosserie (21) ; et
un mécanisme de liaison (5) supportant la roue avant droite (32) et la roue avant gauche (31) de manière à se déplacer l'une par rapport à l'autre dans la direction vers le haut et le bas du châssis de carrosserie (21),
dans lequel le mécanisme de liaison (5) a :
un élément latéral droit (54) supportant une partie supérieure du mécanisme amortisseur droit (34) de manière à tourner autour de l'axe de direction droit (Y) ;
un élément latéral gauche (53) supportant une partie supérieure du mécanisme amortisseur gauche (33) de manière à tourner autour de l'axe de direction gauche (X) ;
un élément transversal supérieur (51) supportant une partie supérieure de l'élément latéral droit (54) au niveau d'une partie d'extrémité droite de celui-ci de manière à tourner autour d'un axe supérieur droit qui s'étend dans une direction avant et arrière du châssis de carrosserie (21) et une partie supérieure de l'élément latéral gauche (53) au niveau d'une partie d'extrémité gauche de celui-ci de manière à tourner autour d'un axe supérieur gauche qui est parallèle à l'axe supérieur droit et supportée sur le châssis de carrosserie (21) au niveau d'une partie médiane de celui-ci de manière à tourner autour d'un axe supérieur médian (Mu) qui est parallèle à l'axe supérieur droit et à l'axe supérieur gauche ; et
un élément transversal inférieur (52) supportant une partie inférieure de l'élément latéral droit (54) au niveau d'une partie d'extrémité droite de celui-ci de manière à tourner autour d'un axe inférieur droit qui est parallèle à l'axe supérieur droit et une partie inférieure de l'élément latéral gauche (53) au niveau d'une partie d'extrémité gauche de celui-ci de manière à tourner autour d'un axe inférieur gauche qui est parallèle à l'axe supérieur gauche et supportée sur le châssis de carrosserie (21) au niveau d'une partie médiane de celui-ci de manière à tourner autour d'un axe inférieur médian (Md) qui est parallèle à l'axe supérieur médian (Mu),
dans lequel le châssis de carrosserie (21) a :
un châssis droit (40R) qui s'étend dans au moins une direction avant et arrière du véhicule pour supporter une partie droite d'une partie montée sur véhicule autre que le châssis de carrosserie (21) ;
un châssis gauche (40L) qui s'étend dans au moins la direction avant et arrière du véhicule pour supporter une partie gauche de la partie montée sur véhicule autre que le châssis de carrosserie (21) ; et
une partie de support de liaison (212) qui est agencée à l'avant d'une extrémité avant (40RF) du châssis droit (40R) et d'une extrémité avant (40LF) du châssis gauche (40L) pour supporter la partie médiane de l'élément transversal supérieur (51) et la partie médiane de l'élément transversal inférieur (52) de manière à tourner,
dans lequel une partie de support tournante (212d) à laquelle est fixée la partie médiane d'au moins l'un de l'élément transversal supérieur (51) et de l'élément transversal inférieur (52) est agencée au niveau d'une partie arrière de la partie de support de liaison (212),
dans lequel le châssis de carrosserie (21) a une partie de connexion (71) reliant ensemble l'extrémité avant (40RF) du châssis droit (40R) et l'extrémité avant (40LF) du châssis gauche (40L), **caractérisé par**
un support de connexion (70) qui est de manière monolithique avec la partie de support tournante (212d) et ayant de manière monolithique une partie d'extension (72) qui s'étend vers l'avant du véhicule à partir de la partie de connexion (71) et qui est soudé à la partie de support de liaison (212) à une extrémité avant de celui-ci, et
dans lequel, lorsque le véhicule est observé depuis l'avant de celui-ci, une partie de soudage (WE) entre la partie d'extension (72) et la partie de support de liaison (212) est positionnée sur une ligne droite centrale imaginaire (C1) qui passe par l'axe supérieur médian (Mu) et l'axe inférieur médian (Md) au-dessus ou au-dessous de la partie de support tournante (212d) dans la direction vers le haut et le bas du châssis de carrosserie (21).

2. Véhicule selon la revendication 1, **caractérisé en ce que** la partie médiane de l'élément transversal inférieur (52) est fixée à la partie support tournante (212d) de manière à tourner, et
dans lequel la partie de soudage (WE) est agencée au-dessous de la partie de support tournante (212d) dans la direction vers le haut et le bas du châssis de carrosserie (21).

3. Véhicule selon la revendication 1, **caractérisé en ce qu'**une partie avant de la partie d'extension (72) est positionnée entre un bord droit (WRE) d'une partie de soudage droite (WE) où le châssis droit (40R) et le support de connexion (70) sont soudés ensemble et un bord gauche (WLE) d'une partie de soudage gauche (WE) où le châssis gauche (40L) et le support de connexion (70) sont soudés ensemble dans une direction gauche et droite du châssis de carrosserie (21).

4. Véhicule selon l'une quelconque des revendications 1 à 3, **caractérisé en ce que**, lorsque le véhicule est observé depuis un côté de celui-ci, l'extrémité avant (40RF) du châssis droit (40R) et l'extrémité avant (40LF) du châssis gauche (40L) sont positionnées derrière une extrémité arrière d'une plage mobile de l'élément transversal supérieur (51) ou une extrémité arrière d'une plage mobile (V) de l'élément transversal inférieur (52) sur une extension de l'axe supérieur médian (Mu) ou l'axe inférieur médian (Md), et au moins une partie de la partie d'extension (72) est positionnée en avant de l'extrémité arrière de la plage mobile (V).

5. Véhicule selon l'une quelconque des revendications 1 à 4, **caractérisé en ce que** la partie de connexion (71) a :
une partie de paroi droite (73) reliant ensemble une partie avant du châssis droit (40R) et une partie arrière de la partie d'extension (72) ;
une partie de paroi gauche (74) reliant ensemble une partie avant du châssis gauche (40L) et la partie arrière de la partie d'extension (72) ;
une partie de paroi arrière (75) reliant ensemble la partie avant du châssis droit (40R) et la partie avant du châssis gauche (40L) ; et
une partie de paroi inférieure (76) reliant ensemble une partie inférieure de la partie de paroi droite (73), une partie inférieure de la partie de paroi gauche (74) et une partie inférieure de la partie de paroi arrière (75) ou une partie de paroi supérieure reliant ensemble une partie supérieure de la partie de paroi droite (73), une partie supérieure de la partie de paroi gauche (74) et une partie supérieure de la partie de paroi arrière (75), et
dans lequel un second espace (S2) qui s'ouvre vers le haut ou vers le bas est formé par une partie arrière de la partie d'extension (72), la partie de paroi droite (73), la partie de paroi gauche (74), la partie de paroi arrière (75), la partie de paroi inférieure (76) ou la partie de paroi supérieure.

6. Véhicule selon la revendication 5, **caractérisé en ce qu'**une partie avant de la partie de paroi droite (73) est positionnée sur la gauche d'une partie arrière de celle-ci, et une partie avant de la partie de paroi gauche (74) est positionnée sur la droite d'une partie arrière de celle-ci lorsque le véhicule est observé de dessus.

7. Véhicule selon l'une quelconque des revendications 1 à 6, **caractérisé en ce que** le châssis droit (40R) a :
un châssis supérieur droit (42R) s'étendant au moins dans la direction avant et arrière du véhicule ; et
un châssis inférieur droit (43R) agencé au-dessous du châssis supérieur droit (42R) et s'étendant dans la direction avant et arrière du véhicule,
dans lequel le châssis gauche (40L) a :
un châssis supérieur gauche (42L) s'étendant au moins dans la direction avant et arrière du véhicule ; et
un châssis inférieur gauche (43L) agencé au-dessous du châssis supérieur gauche (42L) et s'étendant dans la direction avant et arrière du véhicule,
dans lequel une partie avant du châssis supérieur droit (42R) et une partie avant du châssis supérieur gauche (42L) sont reliées à une partie supérieure de la partie de support de liaison (212) via un support supérieur (41),
dans lequel le support supérieur (41) a un trou d'insertion supérieur droit (41ar) dans lequel la partie avant du châssis supérieur droit (42R) est insérée et un trou d'insertion supérieur gauche (41al) dans lequel une partie avant du châssis supérieur gauche (42L) est insérée,
dans lequel le support de connexion (70) a un trou d'insertion inférieur droit (43ar) dans lequel une partie avant du châssis inférieur droit (43R) est insérée et un trou d'insertion inférieur gauche dans lequel une partie avant du châssis inférieur gauche (43L) est insérée, et
dans lequel le support supérieur (41) et le support de connexion (70) sont reliés ensemble par un châssis vertical droit (45R) s'étendant dans la direction vers le haut et le bas du châssis de carrosserie (21) et un châssis vertical gauche (45L) s'étendant dans la direction vers le haut et le bas du châssis de carrosserie (21) et agencé à gauche du châssis vertical droit (45R).

8. Véhicule selon l'une quelconque des revendications 1 à 7, **caractérisé en ce que** par rapport à une direction gauche et droite du véhicule, une extrémité droite de la partie d'extension (72) est positionnée à gauche d'une extrémité droite de la partie de support de liaison (212), et une extrémité gauche de la partie d'extension (72) est positionnée à droite d'une extrémité gauche de la partie de support de liaison (212).
